# EUROPEAN PATENT APPLICATION

(11) **EP 3 546 538 A1**
(43) Date of publication of application: **02.10.2019**
(21) Application number: 17873338.2
(22) Date of filing: 21.11.2017
(51) Int. Cl.: C09J 7/00, C03C 27/12, C09J 153/02

(54) **ADHESIVE SHEET AND LAMINATED GLASS**

(30) Priority: 24.11.2016 JP 2016228097
(71) Applicant: Zeon Corporation, Tokyo 100-8246 (JP)
(72) Inventor: KURIHARA, Ryuta, Tokyo 100-8246 (JP); KOIDE, Yohei, Tokyo 100-8246 (JP); KOHARA, Teiji, Tokyo 100-8246 (JP)
(74) Representative: Vos, Derk
(86) International application number: PCT/JP2017/041905
(87) International publication number: WO 2018/097146

(57) **Abstract**

Disclosed is an adhesive sheet which comprises one or more layers made of a crosslinked elastomer whose peak of tan δ of dynamic viscoelastic characteristics as measured in accordance with JIS K7244-2 falls within a temperature range of -20°C to +20°C. Also disclosed is a laminated glass which comprises the adhesive sheet interposed between glass sheets and integrally bonded to the glass sheets.

## Description

### TECHNICAL FIELD

The present disclosure relates to an adhesive sheet which comprises one or more layers of a sheet made of a crosslinked elastomer, and a laminated glass manufactured using the adhesive sheet as an interlayer film.

### BACKGROUND

Laminated glasses are highly safe due to less scattering of pieces of broken glass even when they are broken by collision with an object and due to high resistance to object penetration. For such properties, laminated glasses are widely used as window glasses for automobiles, aircrafts, buildings and other purposes, and also as wall materials, floor materials, roofing materials and other materials.

Recently, laminated glasses with enhanced sound insulation have come into use in order to enhance the passenger ride comfort of automobiles and other vehicles.

Glass is a material with low damping performance. For example, laminated glass in which glass sheets of about 2 mm thickness are laminated shows reduced acoustic transmission loss in the middle to high frequency range of around 2,000 Hz to 4,000 Hz due to the coincidence effect, resulting in low sound insulation. Methods for improving sound insulation to address this problem are known, which involve the use of a resin interlayer film which has excellent dumping performance for bonding glass sheets thus reducing the coincidence effect while preventing scattering of pieces of broken glass when the laminated glass is broken.

Examples of laminated glasses manufactured by such methods include (a) those having a resin interlayer film in which two different polyvinyl acetals are blended with a plasticizer (PTLS 1 to 4); (b) those having an interlayer film formed by laminating onto both sides of a reinforcing film a tacky rubber layer made of a butyl rubber or thermoplastic block copolymer system (PTL 5); and (C) those having an interlayer film obtained by laminating onto both sides of a hydrogenated styrene-diene block copolymer layer an adhesive resin layer made of polyvinyl acetal resin, ionomer resin or the like (PTLS 6 to 10).

However, polyvinyl acetal resins with large amounts of plasticizer, which are widely used for interlayer films of laminated glasses, have relatively low softening points, so that heat may cause displacement of the glass sheets and/or generation of gas bubbles after lamination. Moreover, due to their high moisture absorption, when the laminated glass is left to stand in a high humidity atmosphere for a long period of time, there is concern that clouding gradually proceeds from the edge and adhesion with glass decreases. Further, also due to their high moisture absorption, it is sometimes necessary to strictly control the moisture content prior to glass lamination in order to control the adhesion with glass (NPL 1). Thus, improvements have been demanded.

Further, laminated glasses having an interlayer film obtained by sandwiching a rubber or diene elastomer layer by a polyvinyl acetal resin or ionomer resin are excellent in preventing scattering of pieces of broken glass and penetration resistance as well as in sound insulation, but have the problems of, for example, being not necessarily sufficient in transparency and light resistance.

PTL 11 teaches an adhesive which comprises a modified hydrogenated block copolymer obtained by introducing an alkoxysilyl group to a hydrogenated block copolymer obtained by hydrogenating all unsaturated bonds of a block copolymer which comprises a polymer block containing an aromatic vinyl compound as a main component and a polymer block containing a chain conjugated diene compound as a main component. PTL 11 discloses that the adhesive is excellent in adhesion to glass, light resistance, heat resistance, transparency and low birefringence, and maintains high adhesive strength even in high temperature, high humidity conditions.

However, this literature is silent with regard to providing a sound insulation performance.

PTL 12 teaches a hydrogenated block copolymer obtained by hydrogenating a block copolymer which comprises a polymer block containing an aromatic vinyl compound as a main component and a polymer block containing a chain conjugated diene compound as a main component, wherein the hydrogenated block copolymer has a peak temperature of tan δ of dynamic viscoelastic characteristics in the range of -20°C to +20°C. PTL 12 discloses that a sheet made of this hydrogenated block copolymer can be used to provide a laminated glass having excellent sound insulation.

However, the hydrogenated block copolymer disclosed in this literature is not necessarily sufficient in heat resistance because the copolymer comprises many polymer block components whose peak temperature of tan δ, i.e., glass transition temperature (hereinafter may be referred to "Tg"), ranges from -20°C to +20°C. CITATION LIST

### Patent Literature

PTL 1: JPH04254444A (US5,190,826A)
PTL 2:JPH06000926A
PTL 3: JPH09156967A
PTL 4: WO2016039476A1
PTL 5: JPH01244843A
PTL 6: JP2007091491A
PTL 7: JP2009256128A
PTL 8: WO2016076337A1
PTL 9: JP2016108220A
PTL 10: JP2016108221A
PTL 11: WO2013176258A1 (US2015/0104654A)
PTL 12: WO2016104740A1

### Non-patent Literature

NPL 1: Y. Fujisaki, Nikkakyo geppo, 35(10), 28(1982)

### SUMMARY

### (Technical Problem)

The present disclosure was made in view of the prior art described above. An object of the present disclosure is to provide an adhesive sheet used for manufacturing a laminated glass having excellent sound insulation and heat resistance, and a laminated glass which comprise the adhesive sheet.

### (Solution to Problem)

In an aim to solve the foregoing problem, the inventors made extensive studies on materials for interlayer films used for manufacturing a laminated glass having excellent sound insulation and heat resistance. As a result, they established that the use of an adhesive sheet which comprises a layer made of a crosslinked elastomer obtained by crosslinking a specific hydrogenated block copolymer whose peak of tan δ of dynamic viscoelastic characteristics falls within the temperature range of -20°C to +20°C makes it possible to reduce the coincidence effect of the resulting laminated glass to thereby retain sound insulation and improve heat resistance of the laminated glass. The present disclosure was completed based on this discovery.

Thus, the present disclosure provides adhesive sheets given in items (1) to (5) below and a laminated glass given in item (6) below.
(1) An adhesive sheet comprising one or more layers made of a crosslinked elastomer whose peak of tan δ of dynamic viscoelastic characteristics as measured in accordance with JIS K7244-2 falls within the temperature range of -20°C to +20°C.
(2) The adhesive sheet of item (1), wherein the crosslinked elastomer is obtained by crosslinking, in the presence or absence of a crosslinking coagent, a hydrogenated block copolymer [D] and/or a modified hydrogenated block copolymer [E] obtained by introducing an alkoxysilyl group to the hydrogenated block copolymer [D], the hydrogenated block copolymer [D] being obtained by hydrogenating carbon-carbon unsaturated bonds of a block copolymer [C] which comprises 1) a polymer block [A] comprising a structural unit derived from an aromatic vinyl compound as a main component, and 2) a polymer block [B] comprising a structural unit derived from a chain conjugated diene compound as a main component.
(3). The adhesive sheet of item (2), wherein the hydrogenated block copolymer [D] is obtained by hydrogenating a block copolymer [C] which comprises two or more polymer blocks [A] and one or more polymer blocks [B] with at least 95 mol% of carbon-carbon unsaturated bonds of at least main chains and side chains of the block copolymer [C] being hydrogenated, the block copolymer [C] having a ratio of wA to wB (wA:wB) of 10:90 to 40:60, where wA is a mass fraction of total polymer block [A] in the block copolymer [C] and wB is a mass fraction of total polymer block [B] in the block copolymer [C], wherein among structural units derived from the chain conjugated diene compound in the polymer block [B], a proportion of structural units derived from 1,2- and 3,4-addition polymerization is 40% or more, and wherein the hydrogenated block copolymer [D] has a weight average molecular weight of 35,000 or more and 200,000 or less.
(4). The adhesive sheet of any one of items [1] to [3], wherein an adhesive layer which comprises a thermoplastic resin as a main component is laminated on at least one side of the layer made of the crosslinked elastomer.
(5). The adhesive sheet of item (4), wherein the thermoplastic resin is at least2 one thermoplastic resin selected from polyvinyl acetal resins, ionomer resins, ethylene-vinyl acetate copolymers, polyolefins having an alkoxysilyl group, and hydrogenated block copolymers having an alkoxysilyl group.
(6). A laminated glass comprising the adhesive sheet of any one of items (1) to (5) interposed between glass sheets and integrally bonded to the glass sheets.

### (Advantageous Effect)

According to the present disclosure, there are provided a novel adhesive sheet used for manufacturing a laminated glass having excellent sound insulation and heat resistance, and a laminated glass which comprise the adhesive sheet.

### BRIEF DESCRIPTION OF THE DRAWINGS

In the accompanying drawings:

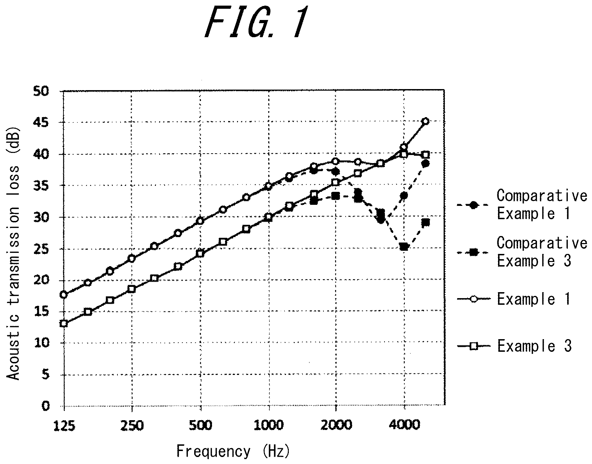

FIG. 1 is a graph of values of acoustic transmission loss versus frequency for laminated glasses obtained in Examples.

### DETAILED DESCRIPTION

The present disclosure will be explained in detail based on the sections titled 1) Adhesive sheet and 2) Laminated glass.

### 1) Adhesive sheet

The adhesive sheet of the present disclosure comprises one or more layers made of a crosslinked elastomer whose peak of tan δ of dynamic viscoelastic characteristics as measured in accordance with JIS K7244-2 falls within the temperature range of -20°C to +20°C.

### 1. Crosslinked elastomer

The crosslinked elastomer, a component which constitutes the adhesive sheet of the present disclosure, has a peak of tan δ of dynamic viscoelastic characteristics as measured in accordance with JIS K7244-2 in a temperature range of -20°C to +20°C. When the peak of tan δ of the crosslinked elastomer falls within this temperature range, the coincidence effect of a laminated glass manufactured using the adhesive sheet of the present disclosure decreases, so that sound insulation performance is developed. Further, when one or more layers made of a crosslinked elastomer whose peak of tan δ falls within the temperature range described above are included in the adhesive sheet, it is possible to improve heat resistance of the adhesive sheet as a whole, by the action of crosslinked structures included in the crosslinked elastomer. The peak value of tan δ is preferably 0.8 or more, more preferably 1.0 or more, and even more preferably 1.2 or more. When the peak value of tan δ is 0.8 or more, the coincidence effect can be effectively reduced.

The term "crosslinked elastomer" as used herein means a polymeric compound which maintains its shape without flowing even when heated and which exhibits rubber elasticity at or above the peak temperature of tan δ described above, and therefore differs from a thermoplastic elastomer which exhibits fluidity when heated.

The crosslinked elastomer can be prepared by crosslinking a precursor thermoplastic elastomer such as a polystyrene elastomer or a polyolefin elastomer by heating, high-energy radiation, contacting with reactive gas or other methods in the presence or absence of a crosslinking coagent.

The "layer made of the crosslinked elastomer," which is a component of the adhesive sheet of the present disclosure, comprises the crosslinked elastomer as a main component and may optionally comprise additives such as crosslinking coagents and condensation catalysts to be described later.

The phrase "crosslinked elastomer as a main component" as used herein means that the crosslinked elastomer accounts for more than 50% by mass, preferably 70% by mass or more, of the total mass (100% by mass) of the "layer made of the crosslinked elastomer."

### (Thermoplastic elastomer)

The thermoplastic elastomer, a precursor of the crosslinked elastomer, is not particularly limited as long as the peak temperature of tan δ of the crosslinked elastomer obtained by crosslinking the thermoplastic elastomer falls within the temperature range of -20°C to +20°C.

Because the peak temperature of tan δ of the crosslinked elastomer used in the present disclosure is almost the same as that of the precursor thermoplastic elastomer, a thermoplastic elastomer whose peak temperature of tan δ falls within the temperature range of -20°C to +20°C may be selected for crosslinking.

By selecting the composition of structural units derived from monomers constituting the thermoplastic elastomer, it is possible to adjust the peak temperature of tan δ of the resulting crosslinked elastomer. When manufacturing a laminated glass having sound insulation, it is preferred not to use common plasticizers to be blended into polyvinyl acetal resins.

Examples of thermoplastic elastomers include polystyrene elastomers, hydrogenated polystyrene elastomers, polyolefin elastomers, polyurethane elastomers, polyester elastomers, and polyamide elastomers. These thermoplastic elastomers may be used singly or in combination of two or more. Preferred among them are hydrogenated polystyrene elastomers for the easiness of controlling tan δ as well as for excellent transparency, light resistance, moisture resistance, mechanical strength, and the like.

### (Hydrogenated polystyrene elastomers)

Preferred among hydrogenated polystyrene elastomers suitable for use in the present disclosure is a hydrogenated block copolymer [D] obtained by hydrogenating 95 mol% or more of at least carbon-carbon unsaturated bonds of main chains and side chains derived from a chain conjugated diene compound of a block copolymer [C] which comprises 1) at least two polymer blocks [A] comprising an aromatic vinyl compound such as styrene as a main component and 2) at least one polymer block [B] comprising the chain conjugated diene compound as a main component.

Preferred among different types of the hydrogenated block copolymer [D] is one obtained by hydrogenating 95 mol% or more of carbon-carbon unsaturated bonds of main chains and side chains derived from the conjugated diene compound and carbon-carbon unsaturated bonds of aromatic rings of the block copolymer [C]. By increasing the hydrogenation ratio, it is possible to provide excellent characteristics such as transparency and light resistance while enhancing heat resistance.

### (Polymer block [A])

The polymer block [A] comprises a component derived from an aromatic vinyl compound in an amount of generally 95% by mass or more, preferably 97% by mass or more, and more preferably 99% by mass or more. The polymer block [A] may consist only of a component derived from an aromatic vinyl compound. As components other than the component derived from an aromatic vinyl compound, the polymer block [A] can comprise component(s) derived from a chain conjugated diene compound and/or other vinyl compound. The amount of other components is generally 5% by mass or less, preferably 3% by mass or less, and more preferably 1% by mass or less.

When the amounts of the components of the polymer block [A] fall within the respective ranges described above, the resulting crosslinked product of the hydrogenated block copolymer [D] exhibits particularly excellent heat resistance.

### (Polymer block [B])

The polymer block [B] comprises a component derived from a chain conjugated diene compound in an amount of generally 95% by mass or more, preferably 97% by mass or more, and more preferably 99% by mass or more. The polymer block [B] may consist only of a component derived from a chain conjugated diene compound. As components other than the component derived from a chain conjugated diene compound, the polymer block [B] can comprise component(s) derived from an aromatic vinyl compound and/or other vinyl compound. The amount of other components is generally 5% by mass or less, preferably 3% by mass or less, and more preferably 1% by mass or less.

The polymer block [B] comprises structural units derived from a chain conjugated diene compound wherein some of the structural units are polymerized via 1,2-linkage and/or 3,4-linkage (hereinafter may collectively referred to as "structural units derived from 1,2- and 3,4-addition polymerization") and the remainder are polymerized via 1,4-linkage (hereinafter may referred to as "structural units derived from 1,4-addition polymerization").

The proportion of structural units derived from a chain conjugated diene compound which are polymerized via 1,2-linkage and/or 3,4-linkage is generally 40% by mass or more and 80% by mass or less, preferably 50% by mass or more and 75% by mass or less, and more preferably 50% by mass or more and 70% by mass or less, based on all the structural units derived from the chain conjugated diene compound in the polymer block [B].

By setting the proportion of structural units derived from a chain conjugated diene compound which are polymerized via 1,2-linkage and/or 3,4-linkage to fall within the range described above, it is possible to control the peak of tan δ at low temperatures of dynamic viscoelastic characteristics of the resulting hydrogenated block copolymer [D] to fall within the temperature range of -20°C to +20°C. Crosslinking of the hydrogenated block copolymer [D] results in a crosslinked elastomer whose peak of tan δ of dynamic viscoelastic characteristics falls within the temperature range of -20°C to +20°C. By using an adhesive sheet which comprises a layer made of such a crosslinked elastomer, it is possible to provide a laminated glass with sound insulation.

### (Aromatic vinyl compound)

Examples of aromatic vinyl compounds include styrene; styrenes having a C1-C6 alkyl group as a substituent, such as α-methylstyrene, 2-methylstyrene, 3-methylstyrene, 4-methylstyrene, 2,4-diisopropylstyrene, 2,4-dimethylstyrene, 4-t-butylstyrene, and 5-t-butyl-2-methylstyrene; styrenes having a halogen atom as a substituent, such as 4-chlorostyrene, dichlorostyrene, and 4-monofluorostyrene; styrenes having a C1-C6 alkoxy group as a substituent, such as 4-methoxystyrene; styrenes having an aryl group as a substituent, such as 4-phenylstyrene; and vinyl naphthalenes such as 1-vinylnaphthalene and 2-vinyl naphthalene. From the viewpoint of moisture absorption, preferred are aromatic vinyl compounds free of polar groups, such as styrene and styrenes having a C1-C6 alkyl group as a substituent, with styrene being particularly preferred for easy industrial availability.

### (Chain conjugated diene compound)

Examples of chain conjugated diene compounds include 1,3-butadiene, isoprene, 2,3-dimethyl-1,3-butadiene, and 1,3-pentadiene. From the viewpoint of moisture absorption, preferred are chain conjugated diene compounds free of polar groups, with 1,3-butadiene and isoprene being more preferred for easy industrial availability, and with isoprene being particularly preferred for the easiness of controlling the peak of tan δ of dynamic viscoelastic characteristics of soft segments of the hydrogenated block copolymer [D] to fall within the temperature range of -20°C to +20°C.

### (Other vinyl compound)

Examples of other vinyl compounds include chain vinyl compounds and cyclic vinyl compounds. Specific examples are vinyl compounds, unsaturated cyclic acid anhydrides, and unsaturated imide compounds, which may have a nitrile group, an alkoxycarbonyl group, a hydroxycarbonyl group or a halogen group as a substituent. Form the viewpoint of moisture absorption, preferred other vinyl compounds are those free of polar groups, for example, C2-C20 chain olefins such as ethylene, propylene, 1-butene, 1-pentene, 1-hexene, 1-heptene, 1-octene, 1-nonene, 1-decene, 1-dodecene, 1-eicosene, 4-methyl-1-pentene, and 4,6-dimethyl-1-heptene; and C5-C20 cyclic olefins such as vinylcyclohexane, 4-vinylcyclohexene and norbornene, with C2-C20 chain olefins being more preferred, and with ethylene and propylene being particularly preferred.

### (Block copolymer [C])

The block copolymer [C] is a polymer which comprises at least two polymer blocks [A] and at least one polymer block [B].

The block copolymer [C] comprises generally three or less polymer blocks [A], preferably two polymer blocks [A], and comprises generally two or less polymer blocks [B], preferably one polymer block [B].

The block form of the block copolymer [C] is not particularly limited and may be a chain block or a radial block, but a chain block is preferred because of excellent mechanical strength. The most preferred form of the block copolymer [C] is a triblock copolymer [A]-[B]-[A] wherein the polymer blocks [A] are bound to both terminals of the polymer block [B].

When the mass fraction of total polymer block [A] in the block copolymer [C] is defined as wA and the mass fraction of total polymer block [B] in the block copolymer [C] is defined as wB, the ratio of wA to wB (wA:wB) is preferably 10:90 to 40:60, more preferably 15:85 to 35:65, and even more preferably 20:80 to 30:70. Similarly, the ratio of the mass fraction of total structural unit derived from the aromatic vinyl compound in the block copolymer [C] to the mass fraction of total structural unit derived from the chain conjugated diene compound in the block copolymer [C] is preferably 10:90 to 40:60, more preferably 15:85 to 35:65, and even more preferably 20:80 to 30:70. By setting wB and the ratio of the mass fraction of total structural unit derived from the chain conjugated diene compound in the block copolymer [C] to not less than the lower limits of the respective ranges described above, it is possible to enhance the sound insulation performance of a laminated glass in which the adhesive sheet of the present disclosure is used. By setting wB and the ratio of the mass fraction of total structural unit derived from the chain conjugated diene compound in the block copolymer [C] to not greater than the upper limits of the respective ranges described above, it is possible to moderately increase the rigidity of the hydrogenated block copolymer [D], so that the working efficiency of the polymer production process and sheet processing process may be increased.

The molecular weight of the block copolymer [C] is preferably 35,000 or more and 200,000 or less, more preferably 40,000 or more and 200,000 or less, even more preferably 50,000 or more and 170,000 or less, and still even more preferably 60,000 or more and 150,000 or less, in a polystyrene equivalent weight average molecular weight (Mw) as measured by gel permeation chromatography (GPC) using tetrahydrofuran (THF) as solvent. The molecular weight distribution (Mw/Mn) of the block copolymer [C] is preferably 3.0 or less, more preferably 2.0 or less, and particularly preferably 1.5 or less.

Methods for producing the block copolymer [C] are not particularly limited. Example of production methods include methods wherein a monomer mixture (a) which comprises the aromatic vinyl compound as a main component and a monomer mixture (b) which comprises the chain conjugated diene compound as a main component are alternately polymerized by living anionic polymerization or other polymerization methods; methods wherein after polymerizing a monomer mixture (a) which comprises the aromatic vinyl compound as a main component and a monomer mixture (b) which comprises the chain conjugated diene compound as a main component in sequence, the terminals of polymer blocks [B] are coupled with a coupling agent; and so forth.

The monomer mixture (a) comprises the aromatic vinyl compound in an amount of generally 95% by mass or more, and preferably 98% by mass or more, based on the whole of the monomer mixture (a). The monomer mixture (b) comprises the chain conjugated diene compound in an amount of generally 80% by mass or more, preferably 90% by mass or more, and more preferably 95% by mass or more, based on the whole of the mixture (b).

The coupling agent used is not particularly limited. Examples of coupling agents include 1,2-dibromoethane, methyldichlorosilane, trichlorosilane, methyltrichlorosilane, tetrachlorosilane, tetramethoxysilane, divinylbenzene, diethyl adipate, dioctyl adipate, benzene-1,2,4-triisocyanate, tolylene diisocyanate, epoxidized 1,2-polybutadiene, epoxidized linseed oil, tetrachlorogermanium, tetrachlorotin, butyltrichlorotin, butyltrichlorosilane, dimethylchlorosilane, 1,4-chloromethylbenzene, and bis(trichlorosilyl)ethane.

The polymer block [B] present in the block copolymer [C] is a random copolymer block having a controlled amount of structural units derived from the chain conjugated diene compound which are polymerized via 3,4-linkage and/or 1,2-linkage, obtained by polymerizing the chain conjugated diene compound and an optional aromatic vinyl compound and other vinyl compounds in the presence of a specific compound having an electron donor atom as a randomizing agent. The amount of structural units derived from the chain conjugated diene compound which are polymerized via 3,4-linkage and/or 1,2-linkage can be controlled by the amount of the randomizing agent added. The proportion of structural units derived from the chain conjugated diene compound which are polymerized via 3,4-linkage and/or 1,2-linkage and the proportion of structural units which are polymerized via 1,4-linkage among the structural units derived from the chain conjugated diene compound can be determined from a ¹H-NMR spectrum of the block copolymer [C].

Preferred compounds having an electron donor atom are those compounds having an electron donor atom such as oxygen (O) or nitrogen (N). Examples of compounds having an electron donor atom include ether compounds, amine compounds, and phosphine compounds. Preferred are ether compounds for their capability of narrowing the molecular weight distribution of the random copolymer block and the less likelihood of inhibiting hydrogenation reactions of the random copolymer block.

Specific examples of compounds having an electron donor atom include diethyl ether, diisopropyl ether, dibutyl ether, tetrahydrofuran, ethylene glycol dimethyl ether, ethylene glycol diethyl ether, ethylene glycol diisopropyl ether, ethylene glycol dibutyl ether, ethylene glycol methyl phenyl ether, propylene glycol dimethyl ether, propylene glycol diethyl ether, propylene glycol diisopropyl ether, propylene glycol dibutyl ether, di(2-tetrahydrofuryl)methane, diethylene glycol dibutyl ether, dipropylene glycol dibutyl ether, and tetramethyl ethylene diamine. The compounds having an electron donor atom are used in an amount of generally 0.001 parts by mass or more and 10 parts by mass or less, and preferably 0.01 parts by mass or more and 1 part by mass or less, based 100 parts by mass of the chain conjugated diene compound.

### (Hydrogenated block copolymer [D])

The hydrogenated block copolymer [D] is a polymer obtained by hydrogenating 95 mol% or more, preferably 97 mol% or more, and more preferably 99 mol% or more, of at least carbon-carbon unsaturated bonds of main chains and side chains derived from the chain conjugated diene compound of the block copolymer [C]. A more preferred hydrogenated block copolymer [D] is a polymer obtained by hydrogenating 95 mol% or more, preferably 97 mol% or more, and more preferably 99 mol% or more, of carbon-carbon unsaturated bonds of main chains and side chains derived from the chain conjugated diene compound and carbon-carbon unsaturated bonds of aromatic rings.

When the hydrogenation ratio of the hydrogenated block copolymer [D] falls within the range described above, it has excellent characteristics such as transparency and light resistance as well as particularly excellent heat resistance.

The hydrogenation ratio of the hydrogenated block copolymer [D] is a mole-based value determined for example by comparison of peak areas of UV detector and RI detector by ¹H-NMR or GPC.

The method, reaction form and the like of hydrogenation of unsaturated bonds are not particularly limited. Hydrogenation may be accomplished by methods known in the art. Such hydrogenation methods are preferred that can increase the hydrogenation ratio and produce less polymer chain cleavage reactions. Examples of such hydrogenation methods in the case of selectively hydrogenating carbon-carbon unsaturated bonds of main chains and side chains derived from the chain conjugated diene compound include those described for example in JPS59133203A, JPH01275605A, JPH05222115A, and JPH0790017A. Examples of hydrogenation methods in the case of selectively hydrogenating carbon-carbon unsaturated bonds of main chains and side chains derived from the chain conjugated diene compound and carbon-carbon unsaturated bonds of aromatic rings include those described for example in WO2011096389A1 and WO2012043708A1.

After completion of the hydrogenation reaction, the hydrogenation catalyst and/or polymerization catalyst are removed from the reaction solution and then the hydrogenated block copolymer [D] can be recovered from the solution by methods known in the art, such as concentration to dryness. The temperature during concentration to dryness may be generally 200°C or higher and 300°C or below. The recovered hydrogenated block copolymer [D] can take any form. It can be generally pelletized for subsequent sheet forming processing and modification reactions.

The molecular weight of the hydrogenated block copolymer [D] is preferably 35,000 or more and 200,000 or less, more preferably 40,000 or more and 200,000 or less, even more preferably 50,000 or more and 170,000 or less, and still even more preferably 60,000 or more and 150,000 or less, in a polystyrene equivalent weight average molecular weight (Mw) as measured by gel permeation chromatography (GPC) using tetrahydrofuran (THF) as solvent. The molecular weight distribution (Mw/Mn) of the hydrogenated block copolymer [D] is preferably 3.0 or less, more preferably 2.0 or less, and particularly preferably 1.5 or less.

When Mw and Mw/Mn fall within the respective ranges described above, it is possible to increase the mechanical strength of a sheet which comprises the cross-linked elastomer of the present disclosure and heat resistance can be enhanced.

### (Modified hydrogenated block copolymer [E])

The modified hydrogenated block copolymer [E] is obtained by introducing an alkoxysilyl group to the hydrogenated block copolymer [D] described above. With an alkoxysilyl group introduced, the modified hydrogenated block copolymer [E] is crosslinked when contacted with moisture to thereby provide heat deformation resistance. Introduction of an alkoxysilyl group also provides adhesion to inorganic materials such as glass and metals.

Examples of alkoxysilyl groups to be introduced include trialkoxysilyl groups such as trimethoxysilyl group, triethoxysilyl group and tripropoxysilyl group; alkyldialkoxysilyl groups such as methyldimethoxysilyl group, methyldiethoxysilyl group, ethyldimethoxysilyl group, ethyldiethoxysilyl group, propyldimethoxysilyl group, and propyldiethoxysilyl group; dialkylalkoxysilyl groups such as dimethylmethoxysilyl group, dimethylethoxysilyl group, diethylmethoxysilyl group, diethylethoxysilyl group, dipropylmethoxysilyl group, and dipropylethoxysilyl group; and aryldialkoxysilyl groups such as phenyldimethoxysilyl group and phenyldiethoxysilyl group.

Preferred are trialkoxysilyl groups and alkyldialkoxysilyl groups from the viewpoint of, for example, easy availability of raw materials.

The alkoxysilyl group may be bonded to the hydrogenated block copolymer [D] either directly or via a divalent organic group. Examples of divalent organic groups include C1-C10 alkylene groups such as methylene group, ethylene group, propylene group, and trimethylene group; C6-C20 arylene groups such as 1,4-phenylene group and 1,4-naphthalene group; ester groups such as -C(=O)-O- and -O-C(=O)-; -C(=O)-; and combinations thereof.

The amount of the introduced alkoxysilyl group is generally 0.1 parts by mass or more and 10 parts by mass or less, preferably 0.2 parts by mass or more and 5 parts by mass or less, and more preferably 0.3 parts by mass or more and 3 parts by mass or less, based on 100 parts by mass of the hydrogenated block copolymer [D].

The amount of the introduced alkoxysilyl group can be determined for example by measuring a ¹H-NMR spectrum (the number of integrations is increased if the introduction amount is small) and calculating the area ratio of the corresponding signal.

When the amount of the introduced alkoxysilyl group is equal to or greater than the lower limit described above, it is possible to enhance the crosslinkability to thereby provide particularly high heat deformation resistance after being brought into contact with moisture. If the amount of the introduced alkoxysilyl group is too large, crosslinking of the alkoxysilyl groups proceeds due to trace amounts of water etc. during introduction of the alkoxysilyl group to the hydrogenated block copolymer [D] or during storage of the modified hydrogenated block copolymer [E] having an alkoxysilyl group introduced, resulting in the tendency of moldability reduction.

Methods for producing the modified hydrogenated block copolymer [E] are not particularly limited. Examples of production methods include those described for example in WO2012043708A1 and JP201578090A.

Preferred methods for producing the modified hydrogenated block copolymer [E] include methods wherein the hydrogenated block copolymer [D] and an ethylenically unsaturated silane compound are reacted in the presence of an organic peroxide.

The ethylenically unsaturated silane compound used is not particularly limited as long as it can undergo graft polymerization with the hydrogenated block copolymer [D] to thereby introduce an alkoxysilyl group to the hydrogenated block copolymer [D]. Examples of ethylenically unsaturated silane compounds include vinyltrialkoxysilanes such as vinyltrimethoxysilane and vinyltriethoxysilane; allyltrialkoxysilanes such as allyltrimethoxysilane and allyltriethoxysilane; dialkoxyalkylvinylsilanes such as dimethoxymethylvinylsilane and diethoxymethylvinylsilane; styryltrialkoxysilanes such as p-styryltrimethoxysilane and p-styryltriethoxysilane; ((meth)acryloxyalkyl)trialkoxysilanes such as 3-acryloxypropyltrimethoxysilane, 3-acryloxypropyltriethoxysilane, 3-acryloxypropyltrimethoxysilane, 3-methacryloxypropyltrimethoxysilane, and 3-methacryloxypropyltriethoxysilane; and ((meth)acryloxyalkyl)alkyldialkoxysilanes such as 3-methacryloxypropylmethyldimethoxysilane and 3-methacryloxypropylmethyldiethoxysilane.

These ethylenically unsaturated silane compounds may be used singly or in combination of two or more.

The amount of the ethylenically unsaturated silane compound used is generally 0.1 parts by mass or more and 10 parts by mass or less, preferably 0.5 parts by mass or more and 5 parts by mass or less, and more preferably 1 part by mass or more and 3 parts by mass or less, based on 100 parts by mass of the hydrogenated block copolymer [D].

Peroxides suitably used in the present disclosure are those having a half life temperature for 1 minute of 170°C to 190°C. Examples of suitable peroxides include t-butylcumyl peroxide, dicumyl peroxide, di-t-hexyl peroxide, 2,5-dimethyl-2,5-di(t-butylperoxy)hexane, di-t-butyl peroxide, and di(2-t-butylperoxyisopropyl)benzene. These peroxides may be used singly or in combination of two or more. The amount of the peroxide used is generally 0.05 parts by mass or more and 2 parts by mass or less, preferably 0.1 parts by mass or more and 1 part by mass or less, and more preferably 0.2 parts by mass or more and 0.5 parts by mass or less, based on 100 parts by mass of the hydrogenated block copolymer [D].

Methods for reacting the hydrogenated block copolymer [D] with the ethylenically unsaturated silane compound in the presence of the peroxide are not particularly limited. Introduction of an alkoxysilyl group to the hydrogenated block copolymer [D] can be accomplished for example by means of kneading using a twin-screw kneader at a desired temperature for a desired time.

The kneading temperature by a twin-screw kneader is generally 180°C or higher and 220°C or lower, preferably 185°C or higher and 210°C or lower, and more preferably 190°C or higher and 210°C or lower. The heating/kneading time is generally about 0.1 minutes or more and about 10 minutes or less, preferably about 0.2 minutes or more and about 5 minutes or less, and more preferably about 0.3 minutes or more and about 2 minutes or less. Kneading and extrusion may be continuously performed with the temperature and dwell time falling within the respective ranges above. The resulting modified hydrogenated block copolymer [E] can take any form. It can be generally pelletized for subsequent molding processing.

In principle, the molecular weight of the modified hydrogenated block copolymer [E] is substantially the same as the molecular weight of the hydrogenated block copolymer [D] used as a raw material because of low amounts of the alkoxysilyl group introduced, provided that neither coupling reaction nor cleavage reaction of the polymer took place during modification. On the other hand, coupling reactions and cleavage reactions of the polymer may occur in combination because the polymer is reacted with the ethylenically unsaturated silane compound in the presence of the peroxide. Thus, in practice, values of weight average molecular weight (Mw) and number average molecular weight (Mn) may vary. In general, the value of the molecular weight distribution of the modified hydrogenated block copolymer [E] may become larger than the value of the molecular weight distribution of the hydrogenated block copolymer [D].

The molecular weight of the modified hydrogenated block copolymer [E] is preferably 35,000 or more and 200,000 or less, more preferably 40,000 or more and 200,000 or less, even more preferably 40,000 or more and 200,000 or less, still even more preferably 50,000 or more and 150,000 or less, and particularly preferably 60,000 or more and 100,000 or less, in a polystyrene equivalent weight average molecular weight (Mw) as measured by gel permeation chromatography (GPC) using tetrahydrofuran (THF) as solvent. The molecular weight distribution (Mw/Mn) of the modified hydrogenated block copolymer [E] is preferably 3.5 or less, more preferably 2.5 or less, and particularly preferably 2.0 or less.

When Mw and Mw/Mn are adjusted to fall within the respective ranges above, it is possible to maintain heat resistance and mechanical strength of the modified hydrogenated block copolymer [E].

### (Crosslinked elastomer)

The crosslinked elastomer used in the present disclosure is obtained by crosslinking a precursor thermoplastic elastomer by heating, high-energy radiation, contacting with reactive gas or other methods in the presence or absence of a crosslinking coagent. When the thermoplastic elastomer does not have a reactive group, it is preferred to blend a crosslinking coagent to improve crosslinkability. When the thermoplastic elastomer has, for example, a reactive group that itself undergoes a condensation reaction, such as an alkoxysilyl group, a condensation catalyst may be blended without blending a crosslinking coagent.

Examples of crosslinking coagents to be blended into the thermoplastic elastomer include triallyl isocyanurate, triallyl cyanurate, diallyl phthalate, diallyl fumarate, diallyl maleate, polyacrylic acid derivatives, polymethacrylic acid derivatives, or esters thereof. These crosslinking coagents may be used singly or in combination of two or more. The amount of the crosslinking coagent used is generally 0.1 parts by mass or more and 15 parts by mass or less, preferably 0.2 parts by mass or more and 10 part by mass or less, and more preferably 0.5 parts by mass or more and 5 parts by mass or less, based on 100 parts by mass of the thermoplastic elastomer. If the amount of the crosslinking coagent used is too small, the effect of improving heat resistance of the thermoplastic elastomer is small. If the amount of the crosslinking coagent used is too large, it may become difficult to control the peak temperature of tan δ of the crosslinked elastomer to a desired value.

The condensation catalyst to be blended into the thermoplastic elastomer having an alkoxysilyl group is not particularly limited as long as it allows for crosslinking in the presence of water. Examples of condensation catalysts include carboxylates of metals such as tin, zinc, iron, lead and cobalt; titanates; organic bases; inorganic acids; and organic acids. More specific examples can include calcium stearate, tetrabutyl orthotitanate, tetranonyl orthotitanate, titanium-i-propoxyoctylene glycolate, diisopropylbis(acetylacetonyl) titanate, diisopropylbis(ethylacetoacetyl) titanate, tetrabutyl titanate, aluminum trisacetylacetonate, aluminum trisethylacetoacetate, diisopropoxyaluminum ethylacetoacetate, zinc caprylate, zinc stearate, dibutyltin dilaurate, dibutyltin diolate, stannous octoate, cobalt naphthenate, barium stearate, dibutylamine, hexylamine, pyridine, sulfuric acid, hydrochloric acid, toluenesulfonic acid, acetic acid, stearic acid, and maleic acid. Preferred examples can include tetrabutyl titanate, tetranonyl titanate, titanium-i-propoxyoctylene glycolate, diisopropylbis(acetylacetonyl) titanate, diisopropylbis(ethylacetoacetyl) titanate, zinc stearate, and dibutyltin dilaurate. These condensation catalysts may be used singly or in combination of two or more. The amount of the condensation catalyst used is preferably 0.01 parts by mass or more and 1.00 parts by mass or less, and more preferably 0.05 parts by mass or more and 0.20 parts by mass or less, based on 100 parts by mass of the thermoplastic elastomer.

Methods for blending the crosslinking coagent and/or condensation catalyst into the thermoplastic elastomer are not particular limited. Specifically, a common method involves mixing the crosslinking coagent and/or condensation catalyst with the thermoplastic elastomer and then uniformly mixing the components by melt-kneading using a twin-screw kneader, extruder or other device.

An example of a preferred method for producing the crosslinked thermoplastic elastomer used in the present disclosure involves shaping a thermoplastic elastomer composition, obtained by blending the precursor thermoplastic elastomer with the crosslinking coagent and/or condensation catalyst as desired, into a sheet, followed by crosslinking of the thermoplastic elastomer.

Since the crosslinked elastomer does not have fluidity even when heated, it is preferred that, prior to crosslinking, the thermoplastic elastomer is shaped into a sheet of desired thickness or laminated with other resin sheet(s) to form a multilayered sheet of desired thickness. When the thermoplastic elastomer is crosslinked after forming such a multilayered sheet, other resin sheet(s) to be laminated may be those having adhesion to glass or those to be peeled off after crosslinking the thermoplastic elatomer layer.

When the thermoplastic elastomer is crosslinkked by irradiation with high energy radiation such as γ rays or electron beams, the irradiation dose of such high energy radiation is generally 25 to 500 kGy, preferably 50 to 400 kGy, and more preferably 100 to 300 kGy. When the irradiation dose is lower than this range, the effect of improving heat resistance of the crosslinked elastomer becomes small, and when it exceeds this range, it may result in poor economical efficiency.

When the thermoplastic elastomer has an alkoxysilyl group, it is crosslinked by contact with moisture as a reactive gas. Examples of methods for contacting with moisture include methods wherein a shaped article (sheet) of the thermoplastic elastomer is kept in a moisture-containing environment (usually at a humidity of 50% RH or more, preferably 80% RH or more, and more preferably 90% RH or more); methods wherein moisture or water is directly sprayed to a shaped article (sheet) of the thermoplastic elastomer; and methods wherein a shaped article (pre-shaped article) of the thermoplastic elastomer having an alkoxysilyl group is immersed in water. The contact time between the shaped article (sheet) of the thermoplastic elastomer and water is generally about 1 hour to about 1 week, though it can be adjusted depending on the temperature of water to be contacted with the thermoplastic elastomer. Higher water temperatures can shorten the contact time. However, from the viewpoint of productivity, contacting is preferably effected at a water temperature of 20°C to 100°C for about 3 to about 24 hours. Being contacted with water, crosslinking proceeds by a condensation reaction between alkoxysilyl groups to cause crosslinking of the elastomer, so that the elastomer becomes infusible and shows improved heat resistance.

### 2. Adhesive

To increase its adhesion to a sheet made of inorganic material such as glass or metal, the adhesive sheet of the present disclosure preferably comprises on at least one side of the crosslinked elastomer layer an adhesive layer formed using an adhesive which comprises a thermoplastic resin as a main component.

The thermoplastic resin to be used as a main component of the adhesive can be at least one thermoplastic resin selected from polyvinyl acetal resins, ionomer resins, ethylene-vinyl acetate copolymers, modified polyolefins having an alkoxysilyl group, and modified hydrogenated block copolymers having an alkoxysilyl group. With the adhesive containing such a thermoplastic resin as a main component, when the adhesive sheet of the present disclosure is used as a laminated glass interlayer film, the adhesive sheet shows improved adhesion to glass, thereby improving flexural rigidity, impact resistance, penetration resistance and other properties of laminated glass.

The amount of the thermoplastic resin in the adhesive is generally 70% by mass or more, preferably 75% by mass or more, and more preferably 80% by mass or more. With the adhesive containing 70% by mass or more of the thermoplastic resin, the resulting adhesive sheet shows excellent mechanical strength and heat resistance as well as excellent adhesion to inorganic materials such as glass and metal.

From the viewpoint of maintaining transparency and heat resistance, maintaining light resistance, high adhesion after long-term exposure in a high temperature and high humidity environment and maintaining high adhesion to glass and impact resistance at low temperatures (e.g., at about -40°C) as an laminated glass interlayer film and of improving flexural rigidity and impact resistance of lightweight glass comprising thin glass plates laminated with the interlayer film, the adhesive layer which comprises a thermoplastic resin as a main component and which is to be laminated onto the layer made of the crosslinked elastomer is particularly preferably such a layer made of an adhesive which comprises a modified hydrogenated copolymer block having an alkoxysilyl group, described for example in WO2012043708A1 or WO2013176258A1.

A modified hydrogenated block copolymer particularly preferably used as the adhesive is a modified hydrogenated copolymer block having an alkoxysilyl group (hereinafter also referred to as "modified hydrogenated copolymer block [L]") obtained by introducing an alkoxysilyl group to a hydrogenated block copolymer (hereinafter also referred to as "hydrogenated block copolymer [K]") obtained by hydrogenating 90 mol% or more of at least carbon-carbon unsaturated bonds of main chains and side chains, preferably 90 mol% or more of the total of carbon-carbon unsaturated bonds of main chains and side chains and carbon-carbon unsaturated bonds of aromatic rings, of a block copolymer [J] comprising 1) at least two polymer blocks which comprise a structural unit derived from an aromatic vinyl compound as a main component (hereinafter "polymer block [G]") and 2) at least one polymer block which comprises a structure unit derived from a chain conjugated diene compound as a main component (hereinafter "polymer block [H]") and having a ratio of wG to wH (wG:wH) of 30:70 to 60:40, where wG is the mass fraction of total polymer block [G] in the block copolymer [J] and wH is the mass fraction of total polymer block [H] in the block copolymer [J].

The molecular weight of the hydrogenated block copolymer [K] is generally 35,000 or more and 200,000 or less, preferably 38,000 or more and 150,000 or less, and more preferably 40,000 or more and 100,000 or less, in a polystyrene equivalent weight average molecular weight (Mw) as measured by gel permeation chromatography (GPC) using tetrahydrofuran (THF) as solvent. The molecular weight distribution (Mw/Mn) of the hydrogenated block copolymer [K] is preferably 3.0 or less, more preferably 2.0 or less, and particularly preferably 1.5 or less.

When Mw and Mw/Mn are adjusted to fall within the respective ranges above, it is possible to enhance heat resistance and mechanical strength of the adhesive to be used in the present disclosure.

For the same reason as discussed above for the modified hydrogenated block copolymer [E], the molecular weight of the modified hydrogenated copolymer block [L] may not significantly deviate from the molecular weight of the hydrogenated block copolymer [K] used as a raw material. However, in general, the value of the molecular weight distribution of the modified hydrogenated block copolymer [L] may become larger than the value of the molecular weight distribution of the hydrogenated block copolymer [K].

The molecular weight of the modified hydrogenated block copolymer [L] is generally 35,000 or more and 200,000 or less, preferably 38,000 or more and 150,000 or less, and more preferably 40,000 or more and 100,000 or less, in a polystyrene equivalent weight average molecular weight (Mw) as measured by gel permeation chromatography (GPC) using tetrahydrofuran (THF) as solvent. The molecular weight distribution (Mw/Mn) of the modified hydrogenated block copolymer [L] is preferably 3.5 or less, more preferably 2.5 or less, and particularly preferably 2.0 or less.

When Mw and Mw/Mn are adjusted to fall within the respective ranges above, the adhesive used in the present disclosure has good heat resistance and mechanical strength.

It is preferred that the peak temperature of tan δ of dynamic viscoelastic characteristics of the modified hydrogenated block copolymer [L] is lower than the peak temperature of tan δ of the crosslinked elastomer, preferably lower than -20°C, and more preferably -30°C or lower. The "peak temperature of tan δ of dynamic viscoelastic characteristics of the modified hydrogenated block copolymer [L]" can also be measured in accordance with JIS K7244-2.

### (Additives)

In addition to the thermoplastic resin described above used as a main component, the adhesive may comprise various additives and/or plasticizers commonly blended into resins. Examples of additives include tackifiers for lowering the adhesion temperature and adjusting adhesion to glass or metal; UV absorbers for blocking ultraviolet light; antioxidants and light stabilizers for improving durability; and infrared absorbers for shielding heat rays.

Tackifiers can be blended in the thermoplastic resin to adjust the bonding temperature of the adhesive layer to glass and the tackiness of the adhesive upon preliminary pressing bonding to fall within respective preferred ranges. Preferred tackifiers are those capable of being uniformly dissolved or dispersed in the thermoplastic resin, and hydrocarbon polymers having a number average molecular weight of 300 to 5,000 can be used.

Specific examples of hydrocarbon polymers include low molecular weight forms of polyisobutylene, poly-1-butene, poly-4-methylpentene, poly-1-octene, ethylene/α-olefin copolymers and hydrogenated forms thereof; low molecular weight forms of polyisoprene and polyisoprene-butadiene copolymers and hydrogenated forms thereof; and C5 petroleum resins, C9 petroleum resins and hydrogenated forms thereof.

These tackifiers can be used singly or in combination of two or more. Preferred tackifiers are hydrogenated low molecular weight forms of polyisobutylene or hydrogenated low molecular weight forms of polyisoprene because they are especially excellent in transparency, light resistance and tackiness.

When the adhesive contains the hydrocarbon polymer as a tackifier, the amount of the tackifier is generally 30 parts by weight or less, preferably 20 parts by weight or less, and more preferably 15 parts by weight or less, based on 100 parts by weight of the thermoplastic resin. When the tackifier content is too high, there is concern that the resulting adhesive sheet shows poor heat resistance and/or blocking of the adhesive sheet easily occurs during storage.

UV absorbers are blended to improve the light resistance of the adhesive sheet. Examples of UV absorbers include benzophenone UV absorbers, salicylic acid UV absorbers, and benzotriazole UV absorbers.

Benzophenone UV absorbers include 2,4-dihydroxybenzophenone, 2-hydroxy-4-methoxybenzophenone, 2-hydroxy-4-methoxybenzophenone-5-sulfonic acid trihydrate, 2-hydroxy-4-octyloxybenzophenone, 4-dodecaloxy-2-hydroxybenzophenone, 4-benzyloxy-2-hydroxybenzophenone, 2,2',4,4'-tetrahydroxybenzophenone, and 2,2'-dihydroxy-4,4'-dimethoxybenzophenone. Salicylic acid UV absorbers include phenyl salicylate, 4-t-butylphenyl-2-hydroxybenzoate, phenyl-2-hydroxybenzoate, 2,4-di-t-butylphenyl-3,5-di-t-butyl-4-hydroxybenzoate, and hexadecyl-3,5-di-t-butyl-4-hydroxybenzoate. Benzotriazole UV absorbers include 2-(2-hydroxy-5-methylphenyl) 2H-benzotriazole, 2-(3-t-butyl-2-hydroxy-5-methylphenyl)-5-chloro-2H-benzotriazole, 2-(3,5-di-t-butyl-2-hydroxyphenyl)-5-chloro-2H-benzotriazole, 2-(3,5-di-t-butyl-2-hydroxyphenyl)-2H-benzotriazole, 2-(3,5-dicumyl-2-hydroxyphenyl)-2H-benzotriazole, 5-chloro-2-(3,5-di-t-butyl-2-hydroxyphenyl)-2H-benzotriazole, 2-(3,5-di-t-amyl-2-hydroxyphenyl)-2H-benzotriazole, 2-(2-hydroxy-5-t-octylphenyl)-2H-benzotriazole, 2-(2-hydroxy-4-octylphenyl)-2H-benzotriazole, 2-(2H-benzotriazol-2-yl)-4-methyl-6-(3,4,5,6-tetrahydrophthalimidylmethyl)p henol, and 2,2'-methylenebis[4-(1,1,3,3-tetramethylbutyl)-6-[(2H-benzotriazol-2-yl)phen ol]]

The amount of the ultraviolet light absorber blended is generally 0.01 parts by mass or more and 4.0 parts by mass or less, preferably 0.05 parts by mass or more and 3.0 parts by mass or less, and more preferably 0.1 parts by mass or more and 2.0 parts by mass or less, based on 100 parts by mass of the thermoplastic resin.

Antioxidants are blended to enhance the thermal stability of the adhesive layer. Examples of antioxidants to be used include phosphorus antioxidants, phenolic antioxidants, and sulfur antioxidants.

As specific examples of antioxidants, examples of phosphorus antioxidants include monophosphite compounds such as triphenyl phosphite, diphenyl isodecyl phosphite, phenyl diisodecyl phosphite, tris(nonylphenyl) phosphite, tris(dinonylphenyl) phosphite, tris(2,4-di-t-butylphenyl) phosphite, and 10-(3,5-di-t-butyl-4-hydroxybenzyl)-9,10-dihydro-9-oxa-10-phosphaphenanth rene-10-oxide; diphosphite compounds such as 4,4'-butylidene-bis(3-methyl-6-t-butylphenyl-di-tridecylphosphite), and 4,4'-isopropylidene-bis (phenyl-di-alkyl(C12-C15)phosphite); such compounds as 6-[3-(3-t-butyl-4-hydroxy-5-methylphenyl)propoxy]-2,4,8,10-tetrakis-t-butyl dibenzo[d,f][1.3.2]dioxaphosphepin, and 6-[3-(3,5-di-t-butyl-4-hydroxyphenyl)propoxy]-2,4,8,10-tetrakis-t-butyldiben zo[d,f][1.3.2]dioxaphosphepin; and so forth.

Examples of phenolic antioxidants include pentaerythritol tetrakis[3-(3,5-di-t-butyl-4-hydroxyphenyl)propionate], 2,2-thio-diethylene bis[3-(3,5-di-t-butyl-4-)hydroxyphenyl)propionate], octadecyl-3-(3,5-di-t-butyl-4-hydroxyphenyl)propionate, 3,9-bis{2-[3-(3-t-butyl-4-hydroxy-5-methylphenyl)proonyloxy]-1,1-dimethyl ethyl}-2,4,8,10-tetraoxaspiro[5,5] undecane, and 1,3,5-trimethyl-2,4,6-tris(3,5-di-t-butyl-4-hydroxybenzyl)benzene.

Examples of sulfur antioxidants include dilauryl-3,3'-thiodipropionate, dimyristyl 3,3'-thiodipropionate, distearyl-3,3'-thiodipropionate, lauryl stearyl-3,3'-thiodipropionate, pentaerythritol-tetrakis-(β-lauryl-thiopropionate), and 3,9-bis(2-dodecylthioethyl)-2,4,8,10-tetraoxaspiro[5,5]undecane.

The amount of the antioxidant blended is generally 0.005 parts by mass or more and 2.0 parts by mass or less, preferably 0.01 parts by mass or more and 1.0 parts by mass or less, and more preferably 0.02 parts by mass or more and 0.5 parts by mass or less, based on 100 parts by mass of the thermoplastic resin.

Light stabilizers are blended to improve the light resistance of the adhesive sheet. Preferred light stabilizers to be used are hindered amine light stabilizers, examples of which include compounds which have a 3,5-di-t-butyl-4-hydroxyphenyl group, a 2,2,6,6-tetramethylpiperidyl group, or a 1,2,2,6,6-pentamethyl-4-piperidyl group.

For their excellent light resistance, preferred are reaction products of 1) formaldehyde polycondensates, 2) {2,4,6-trichloro-1,3,5-triazine/[N,N'-bis (2,2,6,6-tetramethylpiperidin-4-yl)hexane-1,6-diyldiamine]/morpholine polymers}, and 3) formic acid; and reaction products of 1) polymers of N,N'-bis(2,2,6,6-tetramethyl-4-N-methylpiperidyl)-N,N'-diformyl-alkylenedia mines, N,N'-bis(2,2,6,6,6-tetramethyl-4-piperidyl)-N,N'-diformylalkylenediamines, N,N'-bis(2,2,6,6-tetramethyl-4-piperidyl)-N,N'-bisalkylene fatty acid amides, poly[{6-(1,1,3,3-tetramethylbutyl)amino-1,3,5-triazine-2,4-diyl} {(2,2,6,6-tetr amethyl-4-piperidyl)imino}hexamethylene{(2,2,6,6-tetramethyl-4-piperidyl)i mino}] or N,N'-bis(2,2,6,6-tetramethyl-4)-piperidinyl)-1,6-hexanediamine, and 2,4,6-trichloro-1,3,5-triazine, 2) N-butyl-1-butaneamine, and 3) N-butyl-2,2,6,6-tetramethyl-4-piperidineamine. Particularly preferred are reaction products of 1) polymers of N,N'-bis(2,2,6,6-tetramethyl-4-piperidyl)-N,N'-diformylalkylene diamines or N,N'-bis (2,2,6,6-tetramethyl-4-piperidinyl)-1,6-hexanediamine and 2,4,6-trichloro-1,3,5-triazine, 2) N-butyl-1-butaneamine, and 3) N-butyl-2,2,6,6-tetramethyl-4-piperidineamine.

The amount of the hindered amine light stabilizer blended is generally 0.01 parts by mass or more and 2.0 parts by mass or less, preferably 0.05 parts by mass or more and 1.0 parts by mass or less, and more preferably 0.1 parts by mass or more and 0.5 parts by mass or less, based on 100 parts by mass of the thermoplastic resin.

Plasticizers are blended into resins such as polyvinyl acetal resins, which are hard at normal temperature and do not have adhesion to glass, such that they are softened and given adhesion to glass and other materials. Examples of plasticizers include organic acid ester plasticizers, organic phosphoric acid ester plasticizers, and organic phosphorous acid ester plasticizers.

Examples of organic phosphoric acid ester plasticizers include triethylene glycol di-2-ethyl propanoate, triethylene glycol di-2-ethyl butyrate, triethylene glycol di-2-ethyl hexanoate, triethylene glycol dicaprylate, triethylene glycol di-n-octanoate, triethylene glycol di-n-heptanoate, tetraethylene glycol di-n-heptanoate, ethylene glycol di-2-ethyl butyrate, 1,3-propylene glycol di-2-ethyl butyrate, 1,4-butylene glycol di-2-ethyl butyrate, diethylene glycol di-2-ethyl butyrate, diethylene glycol di-2-ethyl hexanoate, dipropylene glycol di-2-ethyl butyrate, triethylene glycol di-2-ethyl pentanoate, tetraethylene glycol di-2-ethyl butyrate, diethylene glycol dicaprylate, dibutyl sebacate, dioctyl azelate, dibutyl carbitol adipate, dihexyl adipate, dioctyl adipate, hexylcyclohexyl adipate, diisononyl adipate, diisodecyl adipate, heptylnonyl adipate, and dibutyl sebacate. Examples of organic phosphoric acid ester plasticizers include tributoxyethyl phosphate, isodecyl phenyl phosphate, and triisopropyl phosphate.

Methods of uniformly dispersing the additives and/or plasticizers into the thermoplastic resin are not particularly limited; known methods commonly used as the methods of producing resin compositions can be applied. For example, an adhesive which comprises as a main component a thermoplastic resin blended with an additive can be produced by uniformly mixing a thermoplastic resin pellet and an additive, followed by melt-kneading and extrusion pelletization of the mixture with a continuous melt-kneader such as a twin-screw extruder.

Alternatively, an adhesive layer can be formed by uniformly mixing the additive mixed with a thermoplastic resin pellet and extruding the mixture while melt-extruding the mixture with an extruder equipped with a T-die.

### 3. Adhesive sheet

The adhesive sheet of the present disclosure comprises one or more layers made of the cross-linked elastomer and, when placed between glass sheets to manufacture a laminated glass, imparts both sound insulation and heat resistance to the laminated glass.

The adhesive sheet of the present disclosure can be a multilayered sheet which comprises, in addition to the layer made of the crosslinked elastomer (hereinafter also referred to as a "P layer"), an adhesive layer (hereinafter also referred to as a "Q layer") and/or a functional layer (hereinafter also referred to as an "R layer").

Examples of R layers as functional layers include layers which selectively block light or allow it pass through, such as ultraviolet absorbing films, infrared reflecting films, infrared absorbing films, dichroic films, and polarizing films; and such layers having light control function, which comprise a liquid crystal element, a thermochromic element, a photochromic element, an electrochromic element or the like as a component. The thickness of the functional layer is not particularly limited as long as the functional layer can exert its functionality.

The adhesive sheet of the present disclosure can have, for example, a single layer configuration of a P layer made of the crosslinked elastomer; a two-layer configuration (P layer/Q layer) wherein a layer made of the crosslinked elastomer and an adhesive layer are laminated; a three-layer configuration (Q layer/P layer/Q layer) wherein a layer made of the crosslinked elastomer is sandwiched between adhesive layers; or a five-layer configuration (Q layer/P layer/Q layer/P layer/Q layer). The adhesive sheet can also have a layer configuration wherein a heat reflecting film is sandwiched, such as Q layer/heat reflecting film/Q layer/P layer/Q layer.

The thickness of the P layer is generally 0.05 mm or more and 0.7 mm or less, preferably 0.07 mm or more and 0.5 mm or less, and more preferably 0.1 mm or more and 0.4 mm or less. The thickness of the Q layer is generally 0.03 mm or more and 1.0 mm or less, preferably 0.05 mm or more and 0.8 mm or less, and more preferably 0.1 mm or more and 0.6 mm or less.

The total thickness of the adhesive sheet of the present disclosure is generally 0.1 mm or more and 2.0 mm or less, preferably 0.2 mm or more and 1.5 mm or less, and more preferably 0.3 mm or more and 1.0 mm or less, although it depends on the layer configuration of the P layer and Q layer.

When the thickness of each of the P layer and Q layer fall within the range described above, a laminated glass manufactured using the adhesive sheet of the present disclosure is provided with sound insulation and sufficient heat resistance, as well as the ability of preventing scattering of broken glass pieces when broken.

Methods for producing the adhesive sheet of the present disclosure include: (i) a method wherein sheet(s) constituting P layer(s) and sheet(s) constituting Q layer(s) are separately prepared, placed atop each other with a desired layer configuration, and laminated together with a laminator or the like equipped with a heat roll; (ii) a method wherein an extrusion laminator is used to melt-extrude an adhesive composition to continuously laminate a Q layer on a P layer while feeding a sheet constituting the P layer previously formed; and (iii) a method wherein a thermoplastic elastomer and an adhesive composition are melt-extruded using a copolymer extrusion molding apparatus to form a multilayer sheet (e.g., 3 layers of 2 types or 5 layers of 2 types) and then high energy rays such as γ rays are applied to crosslink only the thermoplastic elastomer layer(s) to form an adhesive sheet having P layer(s).

The adhesive sheet of the present disclosure may have an embossed surface on at least one side. With an embossed shape present on the surface, blocking of the adhesive sheet can be prevented and, in addition, degassing property when the adhesive sheet is used as an interlayer film for laminated glass can be improved.

The embossed shape to be formed on the surface of the adhesive sheet is not particularly limited in depth, height, pitch, regularity, linear feature, dot feature and other properties; any shape can be employed so long as the effect described above is not compromised.

Examples of embossed shapes that the adhesive sheet of the present disclosure have on the surface include satin finish, continuous groove, square pyramidal recess, and quadrangular pyramidal protrusion disclosed in JPH06198809A, WO1995019885A, JPH0940444A, JPH09241045A, JPH09295839A, JPH10017338A, JPH10167773A, JPH10231150A, JPH11035347A, JPH11147735A, JP2000007390A, JP2000044295A, JP2000203902A, JP2000203900A, JP2000203901A, JP2000256043A, JP2000290046A, JP2000319045A, JP2001019499A, JP2001026468A, JP2001048599A, JP2001114538A, JP2001130931A, JP2001150540A, JP2001163641A, JP2001192244A, JP2001261385A, JP2001220182A, WO2001072509A1, JP2002037648A, JP2002104846A, JP2003128442A, JP2003048762A, JP2003212614A, JP2003238218A, WO2014021459A1, WO2015016361A1, WO2015016358A1 and WO2015016366A, and any combinations of the foregoing.

The adhesive sheet of the present disclosure preferably shows small heat shrinkage at a temperature at the time of manufacturing a laminate such as laminated glass. As to the heat shrinkage of the adhesive sheet, the shrinkage in the machine direction (MD direction) and transverse direction (TD direction) as measured in accordance with JIS K7133 is generally 5% or less, preferably 1% or less, and more preferably 0.1% or less.

The adhesive sheet of the present disclosure can be laminated with sheets made of inorganic material such as glass or metal, heated, and pressed to provide a laminate in which the adhesive sheet and the inorganic material sheets are bonded and integrated. Alternatively, thin glass sheets may be bonded together using a plurality of adhesive sheets placed atop each other to thereby manufacture a lightweight laminated glass which is lightweight and has sound insulation.

### 2) Laminated glass

The laminated glass of the present disclosure has improved sound insulation, with at least one adhesive sheet of the present disclosure being interposed between at least two glass sheets and integrally bonded to the glass sheets.

The glass used for manufacturing a laminated glass with the adhesive sheet of the present disclosure is not particularly limited. Known inorganic glasses such as float plate glass, polished plate glass, patterned glass, wire-reinforced plate glass, and heat ray absorbing plate glass can be used. These types of glass may be colorless, colored, transparent or opaque, and may be used alone or in combination of two or more. The shape of the glass is not particularly limited and may be flat or bent. The material of glass to be used is not particularly limited. For example, aluminosilicate glass, aluminoborosilicate glass, uranium glass, potassium glass, silicate glass, crystallized glass, germanium glass, quartz glass, soda glass, lead glass, barium borosilicate glass, and borosilicate glass can be used.

Although the thickness of the glass which constitutes the laminated glass of the present disclosure is not particularly limited, the glass thickness is generally 10 mm or less, preferably 6 mm or less, and more preferably 3 mm or less. The thickness of the glass is preferably 2.0 mm or less, more preferably 1.5 mm or less, and still more preferably 1.0 mm or less, from the viewpoint of weight reduction. For example, with a laminated glass in which four adhesive sheets of the present disclosure having a thickness of 0.8 mm are placed atop each other and sandwiched between glass sheets having a thickness of 1.5 mm, it is possible to manufacture a laminated glass which prevents a reduction in the acoustic transmission loss due to the coincidence effect occurring around a frequency of 4,000 Hz and which is lightweight with an average specific gravity being 65% or less of that of glass. Two or more glass sheets used in the laminated glass of the present disclosure may be of the same or different thickness.

In the case of using the modified hydrogenated block copolymer [L] as the thermoplastic resin constituting the adhesive layer of the adhesive sheet of the present disclosure, due to its excellent flexural rigidity, even when a laminated glass is manufactured using thin glass sheets with a thickness of 1. 5 mm or less, it is possible to achieve weight reduction of laminated glass without impairing the rigidity of the laminated glass.

The laminated glass of the present disclosure can be manufactured by methods known in the art, e.g., using a vacuum laminator, using a vacuum bag, using a vacuum ring, or pressurizing with an autoclave after temporary press bonding. When manufacturing a laminated glass using thin, curved glass sheets, the glass is very easily broken during the bonding step. To avoid this, for example, methods such as those described in JP201636998A can be used, i.e., a laminate of curved glass sheets and the adhesive sheet of the present disclosure is placed into a polypropylene bag or the like, vacuum-packed for temporary press bonding, and pressed and heated with an autoclave, to manufacture a good laminated glass without causing breakage of glass.

The heating temperature is generally 100°C or higher and 200°C or lower, preferably 110°C or higher and 190°C or lower, more preferably 120°C or higher and 180°C or lower. The pressure applied is generally 0.1 MPa or more and 10 MPa or less, preferably 0.2 MPa or more and 5 MPa or less, and more preferably 0.3 MPa or more and 1 MPa or less. The heating and pressing time is generally 1 minute or more and 90 minutes or less, preferably 3 minutes or more and 60 minutes or less, and more preferably 5 minutes or more and 30 minutes or less. When the heating temperature, pressure and time fall within the respective ranges above, good adhesion can be established between the adhesive sheet and the glass sheet.

The layer configuration of the laminated glass of the present disclosure is not particularly limited. For example, the laminated glass can have the following layer configurations: glass/P layer/glass; glass/Q layer/P layer/Q layer/glass; glass/Q layer/P layer/P layer/Q layer/glass; glass/Q layer/P layer/Q layer/P layer/Q layer/glass; glass/Q layer/R layer/Q layer/P layer/Q layer/glass; glass/Q layer/P layer/Q layer/R layer/Q layer/glass; glass/Q layer/R layer/Q layer/P layer/Q layer/R layer/Q layer/glass; and so forth.

The laminated glass of the present disclosure is excellent in heat resistance and sound insulation because the adhesive sheet is included inside the laminated glass. Further, the laminated glass of the present disclosure can also be excellent in transparency, impact resistance, penetration resistance, flexural rigidity and other properties.

The laminated glass of the present disclosure can be suitably used for window glasses for buildings, window glasses for ships, window glasses for vehicles (roof, side, rear, front, etc.), safety glasses in factories, bulletproof glasses, explosive resistant glasses, glasses for armored vehicles, glasses for fighter aircrafts, glasses for airport control towers, glasses for railway platform screen doors, glass for highway noise barriers, glasses for residential buildings near airports, flooring materials for buildings, wall materials for buildings, partition materials for meeting rooms, glasses for liquid crystal displays, and glasses for OLED sealing.

When the thickness of the adhesive sheet of the present disclosure is made uneven with a wedge-shaped cross section, it is also possible to prevent double images when it is used for glass for a head-up display.

### EXAMPLES

The following provides a more specific description of the present disclosure based on Examples, which however shall not be construed as limiting. In the following description, "part" and "%" are based on mass unless otherwise specified.

Evaluations in Examples are performed by methods described below.

### (1) Measurement of weight average molecular weight (Mw) and molecular weight distribution (Mw / Mn)

Molecular weights of the block copolymers [C] and [J] and the hydrogenated block copolymers [D] and [K] were measured at 38°C as standard polystyrene equivalent values by gel permeation chromatography (GPC) using tetrahydrofuran (THF) as eluent. As a measuring device, HLC8020GPC manufactured by Tosoh Corporation was used.

### (2) Calculation of the proportion of structural units derived from 1,2- and 3,4-addition polymerization among structural units derived from a chain conjugated diene compound in the polymer block [B]

From a ¹H-NMR spectrum (in deuterated chloroform) of the block copolymer [C], the proportion of structural units derived from 1,2- and 3,4-addition polymerization among structural units derived from a chain conjugated diene compound in the polymer block [B] was calculated based on the proportion of ¹H bonded to carbon atoms of carbon-carbon unsaturated bonds in the polymer main chains to ¹H bonded to carbon atoms of carbon-carbon unsaturated bonds in the polymer side chains.

### (3) Measurement of hydrogenation ratio

The hydrogenation ratios of main chains, side chains and aromatic rings of the hydrogenated block copolymers [D] and [K] were calculated as mole ratios (mol%) by measuring ¹H-NMR spectra.

### (4) Measurement of dynamic viscoelastic characteristics

Sheets of crosslinked elastomer were placed atop each other and pressed at 150°C for bonding to produce a sheet having a thickness of about 1 mm. From this sheet, a test piece of 50 mm in length and 10 mm in width was cut out. Using a rheometer (ARES, manufactured by TA Instruments Japan Co., Ltd.), the dynamic viscoelastic characteristics of the test piece was measured in the temperature range of -100°C to +150°C at a heating rate of 5°C/min at a frequency of 1 Hz in accordance with the JIS-K7244-2 method. The peak top temperature at low temperatures of the loss tangent tan δ, and the value of tan δ at the peak top temperature were determined based on the measured dynamic viscoelastic characteristics.

### (5) Sound insulation

Test pieces with a length of 300 mm and a width of 25 mm were cut out from an adhesive sheet containing a crosslinked elastomer layer or from an adhesive sheet not containing a crosslinked elastomer layer. A laminated glass for measuring acoustic characteristics was fabricated by placing one or more of the test pieces between two soda lime glass sheets having a length of 300 mm, a width of 25 mm and a thickness of 2.7 mm or 1.1 mm.

In accordance with the JIS-K 7391 method, for the laminated glass, loss coefficients at specific frequencies in the range of 100 Hz to 5,000 Hz were measured at a temperature of 20°C by the central exciting method using a vibration damping tester (manufactured by RION Co., Ltd.). Acoustic transmission losses at the specific frequencies were determined based on the ratio of the measured loss coefficient and the resonant frequency of the test piece of the laminated glass.

Sound insulation was evaluated as being good (A) when the average of values of sound transmission loss of the laminated glass measured at 1,000 Hz, 1,250 Hz, 1,600 Hz, 2,000 Hz, 2,500 Hz, 3,150 Hz and 4,000 Hz was 35 dB or more, and evaluated as being bad (B) when the average value was less than 35 dB.

### (6) Heat resistance

Tests piece with a length of 300 mm and a width of 300 mm were cut out of an adhesive sheet containing a crosslinked elastomer layer or from an adhesive sheet not containing a crosslinked elastomer layer. A laminated glass for measuring heat resistance was manufactured by placing one or more of the test pieces between two soda lime glass sheets having a length of 300 mm, a width of 300 mm and a thickness of 2.7 mm or 1.1 mm. The laminated glass was placed upright in an oven with only one of the glass sheets supported, and retained at 100°C for 168 hours. Thereafter, appearance change was visually evaluated.

The heat resistance of the laminated glass was evaluated as being good (A) when the laminated glass after the heating did not show any cracks, bubbles, discoloration, glass displacement (0.5 mm or more) or other defects, and evaluated as being bad (B) when the laminated glass after the heating showed any cracks, bubbles, discoloration, glass displacement (0.5 mm or more) or other defects.

### [Reference Example 1] Production of hydrogenated block copolymer [D1]

To a reactor equipped with a stirrer and sufficiently purged with nitrogen gas were added 310 parts of dehydrated cyclohexane and 0.45 parts of ethylene glycol dibutyl ether as a randomizing agent. Further, 0.62 parts of n-butyl lithium (15% cyclohexane solution) was added as a polymerization initiator. With the whole mass being stirred at 60°C, 10.0 parts of dehydrated styrene, an aromatic vinyl compound, was continuously added to the reactor over 40 minutes. After completion of the addition, the whole mass was further stirred at 60°C for 30 minutes. The reaction solution was measured by gas chromatography and the polymerization conversion ratio at this point was 99.5%.

Next, 80.0 parts of dehydrated isoprene, a chain conjugated diene compound, was continuously added to the reaction solution over 100 minutes and stirring was continued for 20 minutes as it was after completion of the addition. The polymerization conversion at this point was 99.5%.

Thereafter, 10.0 parts of dehydrated styrene was further added continuously over 60 minutes, and after completion of the addition, the whole mass was stirred for 30 minutes. The polymerization conversion rate at this point was almost 100%.

The reaction was quenched by the addition of 0.5 parts of isopropyl alcohol to the reaction solution. The obtained block copolymer [C1] had a weight average molecular weight (Mw) of 63,600 and a molecular weight distribution (Mw / Mn) of 1.03, with wA:wB = 20:80 and the proportion of structural units derived from 1,2- and 3,4-addition polymerization among all isoprene-derived structural units being 50%.

Next, the polymer solution is transferred to a pressure resistant reactor equipped with a stirrer, and 7.0 parts of a diatomite-supported nickel catalyst (E22U, manufactured by JGC Catalysts and Chemicals Ltd., nickel load: 60%) as a hydrogenation catalyst and 70 parts of dehydrated cyclohexane were added and mixed. With the reactor purged with hydrogen gas, a hydrogenation reaction was carried out at 190°C and a pressure of 4.5 MPa for 6 hours by feeding hydrogen while stirring the solution. The hydrogenated block copolymer [D1] obtained by the hydrogenation reaction had a weight average molecular weight (Mw) of 67, 200 and a molecular weight distribution (Mw / Mn) of 1.05.

After completion of the hydrogenation reaction, the reaction solution was filtered to remove the hydrogenation catalyst. To the filtrate was then added 1.0 part of xylene solution containing as a phenol antioxidant 0.1 parts of dissolved pentaerythritol tetrakis[3-(3,5-di-t-butyl-4-hydroxyphenyl)propionate] (Songnox® 1010 (Songnox is a registered mark in Japan, other countries, or both), manufactured by KOYO Chemical Research Center) to thereby dissolve the polymer.

Subsequently, using a cylindrical concentration drier (Kontro, manufactured by Hitachi, Ltd.), the solvents cyclohexane, xylene and other volatile components were removed from the solution at 260°C and a pressure of 0.001 MPa or less. The molten polymer was continuously extruded from the die into strands, cooled, and pelletized by a pelletizer to afford 93 parts of a pellet of the hydrogenated block copolymer [D1].

The obtained pelletized hydrogenated block copolymer [D1] had a weight average molecular weight (Mw) of 66,500 and a molecular weight distribution (Mw/Mn) of 1.09, with both of the hydrogenation ratio of double bonds derived from the conjugated diene and the hydrogenation ratio of double bonds derived from aromatic rings being almost 100 mol%. A shaped article of the hydrogenated block copolymer [D1] was colorless and transparent and had a peak temperature of tan δ of -11°C and a tan δ value of 1.2.

### [Reference Example 2] Production of hydrogenated block copolymer [D2]

A block copolymer-containing solution was obtained as in Reference Example 1 up to the polymerization step.

Next, the block copolymer-containing solution was transferred to a pressure resistant reactor equipped with a stirring device. To the reactor was then added as a hydrogenation catalyst a solution obtained by mixing 0.042 parts of bis(cyclopentadienyl)titanium dichloride and 0.122 parts of diethylaluminum chloride with 1.0 part of toluene, and the whole mass was mixed. With the reactor purged with hydrogen gas, a hydrogenation reaction was carried out at 90°C and a pressure of 1.0 MPa for 5 hours by further feeding hydrogen while stirring the mixture.

After the hydrogenation reaction the obtained hydrogenated block copolymer [D2] had a weight average molecular weight (Mw) of 66,800 and a molecular weight distribution (Mw/Mn) of 1.04.

After completion of the hydrogenation reaction, 0.10 parts of water was added to the reaction solution and stirred at 60°C for 60 minutes. The reaction solution was then cooled to 30°C or below and 1.5 parts of activated clay (GALLEON EARTH® ("GALLEON EARTH" is a registered trademark in Japan, other countries, or both), manufactured by Mizusawa Industrial Chemicals, Ltd.) and 1. 5 parts of talc (MICRO ACE® ("MICRO ACE" is a registered trademark in Japan, other countries, or both), manufactured by Nippon Talc Co., Ltd.) were added. The resulting mixture was filtrated to remove insoluble matters. To the filtrate was added 1.0 part of xylene solution containing as a phenol antioxidant 0.1 parts of dissolved pentaerythritol tetrakis[3-(3,5-di-t-butyl-4-hydroxyphenyl)propionate] to thereby dissolve the polymer.

Subsequently, the solvent and other volatile components were removed from the solution as in Reference Example 1 except that the temperature for concentration to dryness was changed to 250°C. In this way 92 parts of a pellet of the hydrogenated block copolymer [D2] was obtained.

The obtained pelletized hydrogenated block copolymer [D2] had a weight average molecular weight (Mw) of 65,700 and a molecular weight distribution (Mw/Mn) of 1.10, with the hydrogenation ratio of double bonds derived from the conjugated diene being almost 100 mol% and the hydrogenation ratio of double bonds derived from aromatic rings being less than 5 mol%. A shaped article of the hydrogenated block copolymer [D2] was colorless and transparent and had a peak temperature of tan δ of -11°C and a tan δ value of 1.2.

### [Reference Example 3] Production of hydrogenated block copolymer [D3]

A block copolymer [C3]-containing solution was obtained as in Reference Example 1 except that 0.18 parts of ethylene glycol dibutyl ether and 0.30 parts of dibutyl ether were added instead of 0.45 parts of ethylene glycol dibutyl ether as a randomizing agent in the polymerization step in Reference Example 1. The obtained block copolymer [C3] had a weight average molecular weight (Mw) of 64,100 and a molecular weight distribution (Mw/Mn) of 1.03, with wA:wB = 20:80 and the proportion of structural units derived from 1,2- and 3,4-addition polymerization among all isoprene-derived structural units being 34%.

The polymer solution was subjected to hydrogenation and concentration to dryness as in Reference Example 1 to produce 95 parts of a pellet of the hydrogenated block copolymer [D3].

The obtained pelletized hydrogenated block copolymer [D3] had a weight average molecular weight (Mw) of 67,100 and a molecular weight distribution (Mw/Mn) of 1.08, with both of the hydrogenation ratio of double bonds derived from the conjugated diene and the hydrogenation ratio of double bonds derived from aromatic rings being almost 100 mol%. A shaped article of the hydrogenated block copolymer [D3] was colorless and transparent and had a peak temperature of tan δ of -30°C and a tan δ value of 1.2.

### [Reference Example 4] Production of Modified hydrogenated block copolymer [E1]

To 100 parts of the pellet of the hydrogenated block copolymer [D1] produced in Reference Example 1 were added 2.0 parts of vinyltrimethoxysilane as an ethylenically unsaturated silane compound and 0.2 parts of di-t-butyl peroxide (PERBUTYL® D (PERBUTYL is a registered mark in Japan, other countries, or both), manufactured by NOF Corporation, half life temperature for 1 minute: 185.9°C) as a peroxide, and mixed with a blender.

This mixture was continuously kneaded using a twin-screw extruder (TEM 37B, manufactured by Toshiba Machine Co., Ltd.) at a resin temperature of 210°C while controlling the device so that the dwell time was about 80 seconds. The kneaded resin was continuously extruded into strands through a die attached to the twin-screw extruder at a die temperature of 210°C and solidified by cooling.

The solidified strands were cut by a pelletizer to produce 95 parts of a pellet of a modified hydrogenated block copolymer [E1] having a trimethoxysilyl group.

An IR spectrum of a surface of the pellet of the produced modified hydrogenated block copolymer [E1] by the ATR method was measured using an infrared spectrophotometer (iS5, manufactured by ThermoFisher Scientific). In the IR spectrum, a new absorption band derived from Si-OCH₃ group was observed at 1,090 cm⁻¹ and new absorption bands derived from Si-CH₂ group were observed at 825 cm⁻¹ and 739 cm⁻¹, which are different from the positions of the absorption bands derived from Si-OCH₃ group and Si-CH group of vinyltrimethoxysilane (1,075 cm⁻¹ for Si-OCH₃ group, and 808 cm⁻¹ and 766 cm⁻¹ for Si-CH₂ group).

After dissolving 10 parts of the pellet of the modified hydrogenated block copolymer [E1] in 100 parts of cyclohexane, the mixture was poured into 400 parts of dehydrated methanol to coagulate the modified hydrogenated block copolymer [E1]. The coagulated matter was filtered off and dried under vacuum at 25°C to isolate 9.5 parts of a crumb of the modified hydrogenated block copolymer [E1].

In a ¹H-NMR spectrum (in deuterated chloroform) of the isolated crumb, a peak based on the proton of methoxy group was observed at 3.6 ppm. From the peak area ratio, it was confirmed that 1.9 parts of vinyltrimethoxysilane was bonded to 100 parts of the hydrogenated block copolymer [D1] to afford the modified hydrogenated block copolymer [E1].

A shaped article of the modified hydrogenated block copolymer [E1] was colorless and transparent and had a peak temperature of tan δ of -11°C and a tan δ value of 1.2.

### [Reference Example 5] Production of modified hydrogenated block copolymer [E2]

94 parts of a pellet of a modified hydrogenated block copolymer [E2] having a trimethoxysilyl group were produced as in Reference Example 4 except that the pellet of the hydrogenated block copolymer [D2] produced in Reference Example 2 was used instead of the hydrogenated block copolymer [D1].

The pellet of the modified hydrogenated block copolymer [E2] was analyzed as in Reference Example 4 and it was confirmed that 1.9 parts of vinyltrimethoxysilane was bonded to 100 parts of the hydrogenated block copolymer [D2] to afford the modified hydrogenated block copolymer [E2].

A shaped article of the modified hydrogenated block copolymer [E2] was colorless and transparent and had a peak temperature of tan δ of -11°C and a tan δ value of 1.2.

### [Reference Example 6] Production of sheet [D1γ] made of crosslinked elastomer

To 100 parts of the pellet of the hydrogenated block copolymer [D1] produced in Reference Example 1 was added 5 parts of triallyl isocyanurate as a crosslinking coagent and mixed to afford a resin composition. Using a T-die type film melt extruder (T-die width: 400 mm) having a twin screw kneader equipped with a 37 mm-diameter screw and a sheet take-up device equipped with a cast roll (with an embossed pattern) and a rubber nip roll, the resin composition was molded to form a sheet [D1] (0.20 mm thick) at a molten resin temperature 170°C, a T die temperature of 170°C and a cast roll temperature of 40°C. The formed sheet [D1] was cut to a width of 330 mm by cutting down the sides with a slitter and taken up in a roll form with a releasable PET film (0.050 mm thick) placed thereon.

The sheet [D1] in roll form was irradiated with gamma rays (irradiation dose: 100 kGy, RADIA INDUSTRY, CO. LTD.) as it was to produce a sheet [D1γ].

Test pieces having a length of 50 mm and a width of 10 mm were cut out from the sheet [D1γ] irradiated with gamma rays and from the sheet [D1] not irradiated with gamma rays, and immersed in THF for 1 hour. The sheet [D1] not irradiated with gamma rays was dissolved, but the sheet [D1γ] irradiated with gamma rays was not dissolved and retained its shape, confirming that the sheet [D1γ] was crosslinked. The sheet [D1γ] was confirmed to have a peak temperature of tan δ of -11°C and a tan δ value of 1.2, which were the same as those for the shaped article of the hydrogenated block copolymer [D1].

### [Reference Example 7] Production of sheet [D2γ] made of crosslinked elastomer

A sheet [D2] and a sheet [D2γ] irradiated with gamma rays (0.20 mm thick) were produced as in Reference Example 6 except that the pellet of the hydrogenated block copolymer [D2] produced in Reference Example 2 was used. The sheet [D2γ] did not dissolve in THF, confirming that it was crosslinked. The sheet [D2γ] was confirmed to have a peak temperature of tan δ of -11°C and a tan δ value of 1.2, which were the same as those for the shaped article of the hydrogenated block copolymer [D2].

### [Reference Example 8] Production of sheet [D3γ] made of crosslinked elastomer

A sheet [D3] and a sheet [D3γ] irradiated with gamma rays (0.20 mm thick) were produced as in Reference Example 6 except that the pellet of the hydrogenated block copolymer [D3] produced in Reference Example 3 was used. The sheet [D3γ] did not dissolve in THF, confirming that it was crosslinked. The sheet [D3γ] was confirmed to have a peak temperature of tan δ of -30°C and a tan δ value of 1.2, which were the same as those for the shaped article of the hydrogenated block copolymer [D3].

### [Reference Example 9] Production of sheet [E1w] made of crosslinked elastomer

0.2 parts of tetrabutyl orthotitanate as a condensation catalyst was added to 100 parts of the pellet of the modified hydrogenated block copolymer [E1] produced in Reference Example 4 and mixed. Next, a roll of a sheet [E1] (0.20 mm thick) having a releasable sheet placed thereon was formed as in Reference Example 6 except that this mixture was used.

The sheet [E1] in roll form was allowed to contact with moisture as it was for 48 hours in a high humidity high temperature chamber having a temperature of 70°C and a humidity of 90% RH to produce a sheet [E1w].

Test pieces having a length of 50 mm and a width of 10 mm were cut out from the sheet [E1w] contacted with moisture and the sheet [E1] not contacted with moisture, and immersed in THF for 1 hour. The sheet [E1] not contacted with moisture was dissolved, but the sheet [E1w] contacted with moisture was not dissolved and retained its shape, confirming that the sheet [E1w] was crosslinked. The sheet [E1w] was confirmed to have a peak temperature of tan δ of -11°C and a tan δ value of 1.2, which were the same as those for the shaped article of the modified hydrogenated block copolymer [E1].

### [Reference Example 10] Production of sheet [E2w] made of crosslinked elastomer

A sheet [E2] and a sheet [E2w] contacted with moisture (0.20 mm thick) were produced as in Reference Example 9 except that the pellet of the modified hydrogenated block copolymer [E2] produced in Reference Example 5 was used.

The sheet [E2w] did not dissolve in THF, confirming that it was crosslinked. The sheet [E2w] was confirmed to have a peak temperature of tan δ of -11°C and a tan δ value of 1.2, which were the same as those for the shaped article of the modified hydrogenated block copolymer [E2].

### [Reference Example 11] Production of adhesive [L1a] containing thermoplastic resin [L1] as a main component

### (Modified hydrogenated block copolymer [L1])

To a reactor similar to that used in Reference Example 1 were added 270 parts of dehydrated cyclohexane, 10 parts of dehydrated styrene and 0.475 parts of dibutyl ether. With the whole mass being stirred at 60°C, 0.75 parts of n-butyllithium (15% cyclohexane solution) was added to initiate polymerization. With the whole mass being stirred at 60°C, 15 parts of dehydrated styrene was continuously added to the reactor over 40 minutes to proceed the polymerization reaction. After completion of the addition, the whole mass was further stirred as it was at 60°C for 20 minutes. The reaction solution was measured by gas chromatography and the polymerization conversion ratio at this point was 99.5%.

Next, 50 parts of dehydrated isoprene was continuously added over 130 minutes to the reaction solution and stirring was continued for 30 minutes as it was after completion of the addition. At this time, the reaction solution was analyzed by GC, and the polymerization conversion was found to be 99.5%. Thereafter, 25 parts of dehydrated styrene was continuously added to the reaction solution over 70 minutes, and after completion of the addition, the mixture was stirred for 60 minutes as it was. At this point, the reaction solution was analyzed by gas chromatography (GC) and the polymerization conversion was found to be almost 100%. Next, 0.5 parts of isopropyl alcohol was added to quench the reaction to afford a polymer solution containing a block copolymer [J1]. The block copolymer [J1] contained in the polymer solution had a weight average molecular weight (Mw) of 54,300 and a molecular weight distribution (Mw/Mn) of 1.04, with wG:wH = 50:50 and the proportion of structural units derived from 1,2- and 3,4-addition polymerization among all isoprene-derived structural units being 8%.

Next, using the polymer solution, a hydrogenation reaction was carried out as in Reference Example 1 to produce 93 parts of a pellet of a hydrogenated block copolymer [K1].

The obtained pelletized hydrogenated block copolymer [K1] had a weight average molecular weight (Mw) of 57,500 and a molecular weight distribution (Mw/Mn) of 1.08, with both of the hydrogenation ratio of double bonds derived from the conjugated diene and the hydrogenation ratio of double bonds derived from aromatic rings being almost 100 mol%. A shaped article of the hydrogenated block copolymer [K1] was colorless and transparent and had a peak temperature of tan δ of -49°C and a tan δ value of 0.18.

96 parts of a pellet of a modified hydrogenated block copolymer [L1] having a trimethoxysilyl group were produced as in Reference Example 4 except that the pellet of the obtained hydrogenated block copolymer [K1] was used.

The pellet of the modified hydrogenated block copolymer [L1] was analyzed as in Reference Example 4 and it was confirmed that 1.8 parts of vinyltrimethoxysilane was bonded to 100 parts of the hydrogenated block copolymer [K1] to afford the modified hydrogenated block copolymer [L1].

### (Adhesive [L1a])

To 100 parts of the pellet of the modified hydrogenated block copolymer [L1] was added 0.4 parts of 2-(3-t-butyl-2-hydroxy-5-methylphenyl)-5-chloro-2H-benzotriazole (Tinuvin® 326 (Tinuvin is a registered mark in Japan, other countries, or both), manufactured by BASF Japan) as a UV absorber and mixed uniformly. The obtained mixture was extruded at a resin temperature of 200°C using a twin-screw extruder (TEM 37-BS, manufactured by Toshiba Machine Co., Ltd.) equipped with a side feeder which enables addition of liquid materials.

On the other hand, a hydrogenated isobutene oligomer (PARLEAM® (PARLEAM is a registered mark in Japan, other countries, or both), manufactured by NOF Corporation, number average molecular weight: 2,200) as a tackifier was added from the side feeder at a ratio of 5 parts to 100 parts of the modified hydrogenated block copolymer [L1]. The kneaded mass was extruded into strands, cooled by air, and cut by a pelletizer to afford 99 parts of a pellet of an adhesive [Lla] in which an UV absorber and a tackifier are blended into the modified hydrogenated block copolymer [L1].

A shaped article of the adhesive [L1a] was colorless and transparent and had a peak temperature of tan δ of -50°C and a tan δ value of 0.19.

### [Reference Example 12] Production of adhesive [L2a] containing thermoplastic resin [L2] as a main component

### (Modified hydrogenated block copolymer [L2])

A hydrogenated block copolymer [K2] was obtained by performing hydrogenation, concentration to dryness, extrusion, cooling and pelletizing as in Reference Example 11 except that the amount of n-butyl lithium (15% cyclohexane solution) added as a polymerization initiator was changed to 0.88 parts.

The obtained pelletized hydrogenated block copolymer [K2] had a weight average molecular weight (Mw) of 49,500 and a molecular weight distribution (Mw/Mn) of 1.06, with both of the hydrogenation ratio of double bonds derived from the conjugated diene and the hydrogenation ratio of double bonds derived from aromatic rings being almost 100 mol%. A shaped article of the hydrogenated block copolymer [K2] was colorless and transparent and had a peak temperature of tan δ of -49°C and a tan δ value of 0.18.

96 parts of a pellet of a modified hydrogenated block copolymer [L2] having a trimethoxysilyl group were produced as in Reference Example 4 except that the pellet of the obtained hydrogenated block copolymer [K2] was used.

The pellet of the modified hydrogenated block copolymer [L2] was analyzed as in Reference Example 4 and it was confirmed that 1.8 parts of vinyltrimethoxysilane was bonded to 100 parts of the hydrogenated block copolymer [K2] to afford the modified hydrogenated block copolymer [L2].

### (Adhesive [L2a])

98 parts of a pellet of an adhesive [L2a] in which an UV absorber is blended into the modified hydrogenated block copolymer [L2] was obtained as in Reference Example 11 except that the pellet of the modified hydrogenated block copolymer [L2] was used instead of the pellet of the modified hydrogenated block copolymer [L1] and that a tackifier was not blended.

A shaped article of the adhesive [L2a] was colorless and transparent and had a peak temperature of tan δ of -50°C and a tan δ value of 0.19.

### [Example 1] Production of adhesive sheet [L1a/D1γ/L1a] having one layer made of crosslinked elastomer (Adhesive sheet [L1a/D1γ/L1a])

Using a T-die type film melt extruder (T-die width: 600 mm) having an extruder equipped with a 40 mm-diameter screw, a cast roll (with embossed pattern), a rubber nip roll, and an extrusion laminate molding machine equipped with a film feeder, the adhesive [L1a] produced in Reference Example 11 was extruded on the cast roll surface under conditions of a molten resin temperature of 200°C, a T die temperature of 200°C, and a cast roll temperature of 70°C, and the crosslinked elastomer sheet [D1γ] produced in Reference Example 6 was fed between the cast roll and the rubber nip roll from the film feeder. In this way an adhesive sheet [L1a/D1γ] was formed in which a crosslinked elastomer layer and an adhesive layer are laminated.

The adhesive sheet was cut to a width of 330 mm by cutting down the sides with a slitter and taken up in a roll form.

Next, using the same extrusion laminate molding machine, the adhesive [L1a] was extruded onto the cast roll surface, and the adhesive sheet [L1a/D1γ] previously formed was inverted and fed between the cast roll and the rubber nip roll from the film feeder. In this way a three-layered adhesive sheet [L1a/D1γ/L1a] was produced in which a crosslinked elastomer layer is sandwiched between adhesive layers. The adhesive sheet was cut to a width of 310 mm by cutting down the sides with a slitter and taken up in a roll form. The thickness of the adhesive sheet [L1a/D1γ/L1a] was 0.80 mm (L1a: 0.30 mm thick, D1γ: 0.20 mm thick, L1a: 0.30 mm thick).

### (Laminated glass [1])

The adhesive sheet was sandwiched between two sheets of soda lime glass (2.7 mm thick each) to provide a laminate having the layer configuration of glass/[L1a/D1γ/L1a]/glass. The laminate was placed in a 75 µm-thick resin bag having the layer configuration of NY (nylon)/adhesive layer/PP (polypropylene). Using a vacuum packing machine (BH-951, Panasonic Corporation) the opening was heat-sealed while degassing the inside air to hermetically package the laminate in the bag. The resin bag closely followed the shape of the laminate.

Thereafter, the hermetically sealed laminate was placed in an autoclave and pressurized and heated at a pressure of 0.8 MPa and a temperature of 140°C for 30 minutes to manufacture a laminated glass [1] for acoustic characteristics measurement and heat resistance evaluation. The mass per unit area of the laminated glass [1] is 14.2 kg/m² (average specific gravity: 2.3).

Sound transmission loss was measured using the laminated glass [1]. A plot of values of sound transmission loss versus frequency is shown in FIG. 1. The result of the evaluation was good (A), with the average of values of sound transmission loss measured in the range of 1,000 Hz to 4,000 Hz being 38 dB.

The heat resistance of the laminated glass [1] was evaluated as being good (A), with no deformation, glass displacement, cracks, bubbles, discoloration or other abnormalities observed. The results are shown in Table 1.

### [Example 2] Production of adhesive sheet [L1a/E1w/L1a] having one layer made of crosslinked elastomer (Adhesive sheet [L1a/E1w/L1a])

A three-layered adhesive sheet [L1a/E1w/L1a] in which a crosslinked elastomer layer is sandwiched between adhesive layers was produced as in Example 1 except that the same extrusion laminate molding machine as used in Example 1 was used to feed the crosslinked elastomer sheet [E1w] produced in Reference Example 9 from the film feeder.

The thickness of the adhesive sheet [L1a/E1w/L1a] was 0.80 mm (L1a: 0.30 mm thick, E1w: 0.20 mm thick, L1a: 0.30 mm thick).

### (Laminated glass [2])

The adhesive sheet was sandwiched between two sheets of soda lime glass (2.7 mm thick each) to provide a laminate having the layer configuration of glass/[L1a/E1w/L1a]/glass. A laminated glass [2] for acoustic characteristics measurement and heat resistance evaluation was then manufactured as in Example 1. The mass per unit area of the laminated glass [2] is 14.2 kg/m² (average specific gravity: 2.3).

Sound transmission loss was measured using the laminated glass [2]. The result of the evaluation was good (A), with the average of values of sound transmission loss measured in the range of 1,000 Hz to 4,000 Hz being 38 dB. The heat resistance of the laminated glass [2] was evaluated as being good (A), with no deformation, glass displacement, cracks, bubbles, discoloration or other abnormalities observed. The results are shown in Table 1.

### [Comparative Example 1] Adhesive sheet [L1a/] without crosslinked elastomer layer (adhesive sheet [L1a])

An adhesive sheet [L1a] (0.80 mm thick) having only the adhesive [L1a] produced in Reference Example 11 was formed using the same extrusion laminate molding machine as used in Example 1 without feeding any film from the film feeder.

### (Laminated glass [101])

The adhesive sheet was sandwiched between two sheets of soda lime glass (2.7 mm thick each) to provide a laminate having the layer configuration of glass/[L1a]/glass. A laminated glass [101] for acoustic characteristics measurement and heat resistance evaluation was then manufactured as in Example 1. The mass per unit area of the laminated glass [101] is 14.2 kg/m² (average specific gravity: 2.3).

Sound transmission loss was measured using the laminated glass [101]. A plot of values of sound transmission loss versus frequency is shown in FIG. 1. A large reduction in the sound transmission loss due to the coincidence effect was observed around the frequency of 3,150 Hz. The result of the evaluation was bad (B), with the average of values of sound transmission loss measured in the range of 1,000 Hz to 4,000 Hz being 34 dB. The heat resistance of the laminated glass [101] was evaluated as being good (A), with no deformation, glass displacement, cracks, bubbles, discoloration or other abnormalities observed. The results are shown in Table 1.

### [Comparative Example 2] Adhesive sheet [L1a/D1/L1a] having one layer made of thermoplastic elastomer (Adhesive sheet [L1a/D1/L1a])

An adhesive sheet [L1a/D1/L1a] in which a thermoplastic elastomer layer and adhesive layers are laminated was formed as in Example 1 except that the same extrusion laminate molding machine as used in Example 1 was used to feed the thermoplastic elastomer sheet [D1] prior to crosslinking produced in Reference Example 6 from the film feeder.

The thickness of the adhesive sheet [L1a/D1/L1a] was 0.80 mm (Lla: 0.30 mm thick, D1: 0.20 mm thick, L1a: 0.30 mm thick).

### (Laminated glass [102])

The adhesive sheet was sandwiched between two sheets of soda lime glass (2.7 mm thick each) to provide a laminate having the layer configuration of glass/[L1a/D1/L1a]/glass. A laminated glass [102] for acoustic characteristics measurement and heat resistance evaluation was then manufactured as in Example 1.

The mass per unit area of the laminated glass [102] is 14.2 kg/m² (average specific gravity: 2.3).

Sound transmission loss was measured using the laminated glass [102]. The result of the evaluation was good (A), with the average of values of sound transmission loss measured in the range of 1,000 Hz to 4,000 Hz being 38 dB. The heat resistance of the laminated glass [102] was evaluated as being bad (B) with glass displacement of not less than 0.5 mm being observed, although cracks, bubbles, discoloration or other abnormalities were not observed. The results are shown in Table 1.

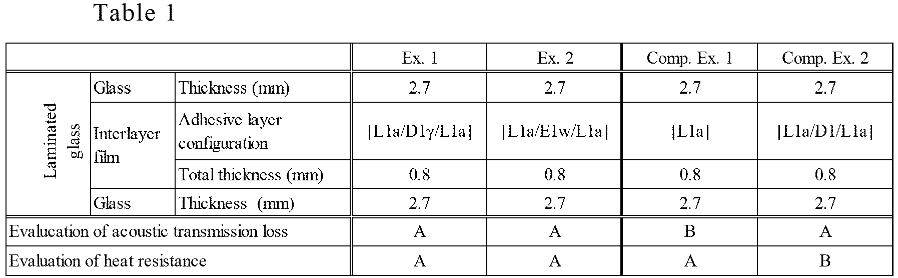

### [Example 3] Manufacture of laminated glass [3]

Three adhesive sheets manufactured in Example 1 were sandwiched between two sheets of soda lime glass (1.1 mm thick each) to provide a laminate having the layer configuration of glass/[L1a/D1γ/L1a]/[L1a/D1γ/L1a]/[L1a/D1γ/L1a]/glass. A laminated glass [3] for acoustic characteristics measurement and heat resistance evaluation was then manufactured as in Example 1. The laminated glass [3] was lightweight with the mass per unit area being 7.7 kg/m² (average specific gravity: 1.7), and was also excellent in transparency.

Sound transmission loss was measured using the laminated glass [3]. A plot of values of sound transmission loss versus frequency is shown in FIG. 1. The result of the evaluation was good (A), with the average of values of sound transmission loss measured in the range of 1,000 Hz to 4,000 Hz being 36 dB.

The heat resistance of the laminated glass [3] was evaluated as being good (A), with no deformation, glass displacement, cracks, bubbles, discoloration or other abnormalities observed. The results are shown in Table 2.

### [Example 4] Manufacture of laminated glass [4]

Three adhesive sheets manufactured in Example 2 were sandwiched between two sheets of soda lime glass (1.1 mm thick each) to provide a laminate having the layer configuration of glass/[L1a/E1w/L1a]/[L1a/E1w/L1a]/[L1a/E1w/L1a]/glass. A laminated glass [4] for acoustic characteristics measurement and heat resistance evaluation was then manufactured as in Example 1.

The laminated glass [4] was lightweight with the mass per unit area being 7.7 kg/m² (average specific gravity: 1.7), and was also excellent in transparency.

Sound transmission loss was measured using the laminated glass [4]. The result of the evaluation was good (A), with the average of values of sound transmission loss measured in the range of 1,000 Hz to 4,000 Hz being 36 dB. The heat resistance of the laminated glass [4] was evaluated as being good (A), with no deformation, glass displacement, cracks, bubbles, discoloration or other abnormalities observed. The results are shown in Table 2.

### [Comparative Example 3] Manufacture of laminated glass [103]

Three adhesive sheets manufactured in Comparative Example 1 were sandwiched between two sheets of soda lime glass (1.1 mm thick each) to provide a laminate having the layer configuration of glass/[L1a]/[L1a]/[L1a]/glass. A laminated glass [103] for acoustic characteristics measurement and heat resistance evaluation was then manufactured as in Example 1.

The laminated glass [103] was lightweight with the mass per unit area being 7.7 kg/m² (average specific gravity: 1.7), and was also excellent in transparency.

Sound transmission loss was measured using the laminated glass [103]. A plot of values of sound transmission loss versus frequency is shown in FIG. 1. A large reduction in the sound transmission loss due to the coincidence effect was observed around the frequency of 4,000 Hz. The result of the evaluation was bad (B), with the average of values of sound transmission loss measured in the range of 1,000 Hz to 4,000 Hz being 31 dB.

The heat resistance of the laminated glass [103] was evaluated as being good (A), with no deformation, glass displacement, cracks, bubbles, discoloration or other abnormalities observed. The results are shown in Table 2.

### [Comparative Example 4] Manufacture of laminated glass [104]

Three adhesive sheets manufactured in Comparative Example 2 were sandwiched between two sheets of soda lime glass (1.1 mm thick each) to provide a laminate having the layer configuration of glass/[L1a/D1/L1a]/[L1a/D1/L1a]/[L1a/D1/L1a]/glass. A laminated glass [104] for acoustic characteristics measurement and heat resistance evaluation was then manufactured as in Example 1. The laminated glass [104] was lightweight with the mass per unit area being 7.7 kg/m² (average specific gravity: 1.7), and was also excellent in transparency.

Sound transmission loss was measured using the laminated glass [104]. The result of the evaluation was good (A), with the average of values of sound transmission loss measured in the range of 1,000 Hz to 4,000 Hz being 36 dB.

The heat resistance of the laminated glass [104] was evaluated as being bad (B) with glass displacement of not less than 0.5 mm being observed, although cracks, bubbles, discoloration or other abnormalities were not observed. The results are shown in Table 2.

### [Example 5] Production of adhesive sheet [L1a/D2γ/L1a] having one layer made of crosslinked elastomer

### (Adhesive sheet [L1a/D2γ/L1a])

A three-layered adhesive sheet [L1a/D2γ/L1a] in which a crosslinked elastomer layer is sandwiched between adhesive layers was produced as in Example 1 except that the same extrusion laminate molding machine as used in Example 1 was used to feed the crosslinked elastomer sheet [D2y] produced in Reference Example 7 from the film feeder.

The thickness of the adhesive sheet [L1a/D2γ/L1a] was 0.80 mm (Lla: 0.30 mm thick, D2y: 0.20 mm thick, L1a: 0.30 mm thick).

### (Laminated glass [5])

Three adhesive sheets [L1a/D2γ/L1a] produced above were sandwiched between two sheets of soda lime glass (1.1 mm thick each) to provide a laminate having the layer configuration of glass/[L1a/D2γ/L1a]/[L1a/D2γ/L1a]/[L1a/D2γ/L1a]/glass. A laminated glass [5] for acoustic characteristics measurement and heat resistance evaluation was then manufactured as in Example 1.

The laminated glass [5] was lightweight with the mass per unit area being 7.7 kg/m² (average specific gravity: 1.7), and was also excellent in transparency.

Sound transmission loss was measured using the laminated glass [5]. The result of the evaluation was good (A), with the average of values of sound transmission loss measured in the range of 1,000 Hz to 4,000 Hz being 36 dB.

The heat resistance of the laminated glass [5] was evaluated as being good (A), with no deformation, glass displacement, cracks, bubbles, discoloration or other abnormalities observed. The results are shown in Table 3.

### [Example 6] Production of adhesive sheet [L1a/E2w/L1a] having one layer made of crosslinked elastomer

### (Adhesive sheet [L1a/E2w/L1a])

A three-layered adhesive sheet [L1a/E2w/L1a] in which a crosslinked elastomer layer is sandwiched between adhesive layers was produced as in Example 1 except that the same extrusion laminate molding machine as used in Example 1 was used to feed the crosslinked elastomer sheet [E2w] produced in Reference Example 10 from the film feeder.

The thickness of the adhesive sheet [L1a/E2w/L1a] was 0.80 mm (L1a: 0.30 mm thick, E2w: 0.20 mm thick, L1a: 0.30 mm thick).

### (Laminated glass [6])

Three adhesive sheets [L1a/E2w/L1a] produced above were sandwiched between two sheets of soda lime glass (1.1 mm thick each) to provide a laminate having the layer configuration of glass/[L1a/E2w/L1a]/[L1a/E2w/L1a]/[L1a/E2w/L1a]/glass. A laminated glass [6] for acoustic characteristics measurement and heat resistance evaluation was then manufactured as in Example 1.

The laminated glass [6] was lightweight with the mass per unit area being 7.7 kg/m² (average specific gravity: 1.7), and was also excellent in transparency.

Sound transmission loss was measured using the laminated glass [6]. The result of the evaluation was good (A), with the average of values of sound transmission loss measured in the range of 1,000 Hz to 4,000 Hz being 36 dB.

The heat resistance of the laminated glass [6] was evaluated as being good (A), with no deformation, glass displacement, cracks, bubbles, discoloration or other abnormalities observed. The results are shown in Table 3.

### [Example 7] Production of adhesive sheet [L2a/D1γ/L2a] having one layer made of crosslinked elastomer

Using a T-die type film melt extruder (T-die width: 600 mm) having an extruder equipped with a 40 mm-diameter screw, a cast roll (with embossed pattern), a rubber nip roll, and an extrusion laminate molding machine equipped with a film feeder, the adhesive [L2a] manufactured in Reference Example 12 was extruded on the cast roll surface under conditions of a molten resin temperature of 190°C, a T die temperature of 190°C, and a cast roll temperature of 60°C, and the crosslinked elastomer sheet [D1γ] produced in Reference Example 6 was fed between the cast roll and the rubber nip roll from the film feeder. In this way an adhesive sheet [L2a/D1γ] was formed in which a crosslinked elastomer layer and an adhesive layer are laminated.

The adhesive sheet was cut to a width of 330 mm by cutting down the sides with a slitter and taken up in a roll form.

Next, using the same extrusion laminate molding machine, the adhesive [L2a] was extruded onto the cast roll surface, and the adhesive sheet [L2a/D1γ] previously formed was inverted and fed between the cast roll and the rubber nip roll from the film feeder. In this way a three-layered adhesive sheet [L2a/D1γ/L2a] was produced in which a crosslinked elastomer layer is sandwiched between adhesive layers. The adhesive sheet was cut to a width of 310 mm by cutting the sides with a slitter and taken up in a roll form. The thickness of the adhesive sheet [L2a/D1γ/L2a] was 0.80 mm (L2a: 0.30 mm thick, D1γ: 0.20 mm thick, L2a: 0.30 mm thick).

### (Laminated glass [8])

Three adhesive sheets [L2a/D1γ/L2a] produced above were sandwiched between two sheets of soda lime glass (2.7 mm thick each) to provide a laminate having the layer configuration of glass/[L2a/D1γ/L2a]/glass. The laminate was placed in a 75 µm-thick resin bag having the layer configuration of NY (nylon)/adhesive layer/PP (polypropylene). Using a vacuum packing machine (BH-951, Panasonic Corporation) the opening was heat-sealed while degassing the inside air to hermetically package the laminate in the bag. The resin bag closely followed the shape of the laminate.

Thereafter, the hermetically sealed laminate was placed in an autoclave and pressurized and heated at a pressure of 0.8 MPa and a temperature of 140°C for 30 minutes to manufacture a laminated glass [8] for acoustic characteristics measurement and heat resistance evaluation. The mass per unit area of the laminated glass [8] is 14.2 kg/m² (average specific gravity: 2.3).

### [Comparative Example 5] Production of adhesive sheet [L1a/D2/L1a] having one layer made of thermoplastic elastomer

### (Adhesive sheet [L1a/D2/L1a])

An adhesive sheet [L1a/D2/L1a] in which a thermoplatic elastomer layer and adhesive layers are laminated was formed as in Example 1 except that the same extrusion laminate molding machine as used in Example 1 was used to feed the thermoplastic elastomer sheet [D2] prior to crosslinking produced in Reference Example 7 from the film feeder.

The thickness of the adhesive sheet [L1a/D2/L1a] was 0.80 mm (Lla: 0.30 mm thick, D2: 0.20 mm thick, L1a: 0.30 mm thick).

### (Laminated glass [105])

Three adhesive sheets [L1a/D2/L1a] produced above were sandwiched between two sheets of soda lime glass (1.1 mm thick each) to provide a laminate having the layer configuration of glass/[L1a/D2/L1a]/[L1a/D2/L1a]/[L1a/D2/L1a]/glass. A laminated glass [105] for acoustic characteristics measurement and heat resistance evaluation was then manufactured as in Example 1.

The laminated glass [105] was lightweight with the mass per unit area being 7.7 kg/m² (average specific gravity: 1.7), and was also excellent in transparency.

Sound transmission loss was measured using the laminated glass [105]. The result of the evaluation was good (A), with the average of values of sound transmission loss measured in the range of 1,000 Hz to 4,000 Hz being 36 dB.

The heat resistance of the laminated glass [105] was evaluated as being bad (B) with glass displacement of not less than 0.5 mm being observed, although cracks, bubbles, discoloration or other abnormalities were not observed. The results are shown in Table 3.

### [Comparative Example 6] Production of adhesive sheet [L1a/D3γ/L1a] having one layer made of crosslinked elastomer

### (Adhesive sheet [L1a/D3γ/L1a])

An adhesive sheet [L1a/D3/L1a] in which a thermoplastic elastomer layer and adhesive layers are laminated was formed as in Example 1 except that the same extrusion laminate molding machine as used in Example 1 was used to feed the crosslinked elastomer sheet [D3y] produced in Reference Example 8 from the film feeder.

The thickness of the adhesive sheet [L1a/D3γ/L1a] was 0.80 mm (Lla: 0.30 mm thick, D3y: 0.20 mm thick, L1a: 0.30 mm thick).

### (Laminated glass [106])

Three adhesive sheets [L1a/D3γ/L1a] produced above were sandwiched between two sheets of soda lime glass (1.1 mm thick each) to provide a laminate having the layer configuration of glass/[L1a/D3γ/L1a]/[L1a/D3γ/L1a]/[L1a/D3γ/L1a]/glass. A laminated glass [106] for acoustic characteristics measurement and heat resistance evaluation was then manufactured as in Example 1. The laminated glass [106] was lightweight with the mass per unit area being 7.7 kg/m² (average specific gravity: 1.7), and was also excellent in transparency.

Sound transmission loss was measured using the laminated glass [106]. The result of the evaluation was bad (B), with the average of values of sound transmission loss measured in the range of 1,000 Hz to 4,000 Hz being 32 dB.

The heat resistance of the laminated glass [106] was evaluated as being good (A), with no deformation, glass displacement, cracks, bubbles, discoloration or other abnormalities observed. The results are shown in Table 3.

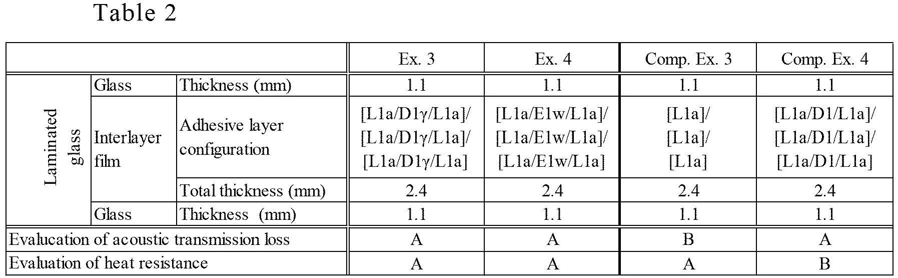

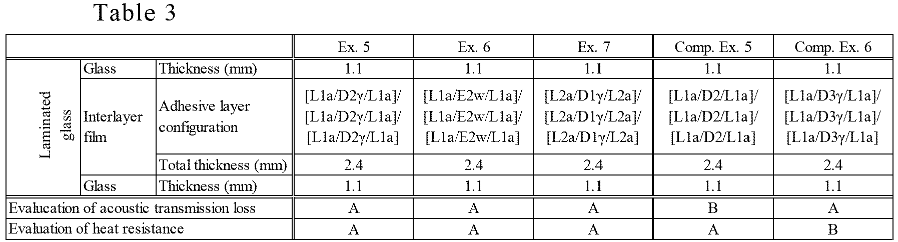

The following can be understood from the results of Examples and Comparative Examples.

Laminated glasses in which a sheet of an adhesive which comprises as a main component a thermoplastic resin whose peak temperature of tan δ of dynamic viscoelastic characteristics does not fall within the range of -20°C to +20°C (peak temperature of tan δ: -50°C) is used as an interlayer film showed poor sound insulation, with a reduction in the sound transmission loss due to the coincidence effect in the frequency range of 2,000 Hz to 4,000 Hz (Comparative Examples 1 and 3).

Laminated glasses in which an adhesive sheet having one or more layers made of a crosslinked elastomer having a peak of tan δ of dynamic viscoelastic characteristics within the range of -20°C to +20°C is used as an interlayer film showed improved sound insulation as well as sufficient heat resistance, with a reduced drop in the sound transmission loss due to the coincidence effect in the frequency range of 2,000 Hz to 4,000 Hz (Examples 1 to 7).

Laminated glasses in which an adhesive layer having one or more layers made of a thermoplastic elastomer having a peak of tan δ of dynamic viscoelastic characteristics at -11°C (within the range of -20°C to +20°C) is used as an interlayer film also showed improved sound insulation with a reduced drop in the sound transmission loss due to the coincidence effect in the frequency range of 2,000 Hz to 4,000 Hz, but showed insufficient heat resistance (Comparative Examples 2, 4 and 5).

Even in the case of using a crosslinked elastomer (with a peak temperature of tan δ of -30°C), if the peak of tan δ of dynamic viscoelastic characteristics does not fall within the range of -20°C to +20°C, a laminated glass in which an adhesive sheet having a layer made of such a crosslinked elastomer is used as an interlayer film showed poor sound insulation in the frequency range of 2,000 Hz to 4,000 Hz (Comparative Example 6).

### INDUSTRIAL APPLICABILITY

Using an adhesive sheet of the present disclosure which comprises one or more layers made of a crosslinked elastomer as an interlayer film for laminated glass, it is possible to provide a laminated glass having excellent sound insulation and heat resistance, which is industrially useful.

## Claims

1. An adhesive sheet comprising one or more layers made of a crosslinked elastomer whose peak of tan δ of dynamic viscoelastic characteristics as measured in accordance with JIS K7244-2 falls within a temperature range of -20°C to +20°C.

2. The adhesive sheet of claim 1, wherein the crosslinked elastomer is obtained by crosslinking, in the presence or absence of a crosslinking coagent, a hydrogenated block copolymer [D] and/or a modified hydrogenated block copolymer [E] obtained by introducing an alkoxysilyl group to the hydrogenated block copolymer [D], the hydrogenated block copolymer [D] being obtained by hydrogenating carbon-carbon unsaturated bonds of a block copolymer [C] which comprises 1) a polymer block [A] comprising a structural unit derived from an aromatic vinyl compound as a main component, and 2) a polymer block [B] comprising a structural unit derived from a chain conjugated diene compound as a main component.

3. The adhesive sheet of claim 2, wherein the hydrogenated block copolymer [D] is obtained by hydrogenating a block copolymer [C] which comprises two or more polymer blocks [A] and one or more polymer blocks [B] with at least 95 mol% of carbon-carbon unsaturated bonds of at least main chains and side chains of the block copolymer [C] being hydrogenated, the block copolymer [C] having a ratio of wA to wB (wA:wB) of 10:90 to 40:60, where wA is a mass fraction of total polymer block [A] in the block copolymer [C] and wB is a mass fraction of total polymer block [B] in the block copolymer [C], wherein among structural units derived from the chain conjugated diene compound in the polymer block [B], a proportion of structural units derived from 1,2- and 3,4-addition polymerization is 40% or more, and
wherein the hydrogenated block copolymer [D] has a weight average molecular weight of 35,000 or more and 200,000 or less.

4. The adhesive sheet of any one of claims 1 to 3, wherein an adhesive layer which comprises a thermoplastic resin as a main component is laminated on at least one side of the layer made of the crosslinked elastomer.

5. The adhesive sheet of claim 4, wherein the thermoplastic resin is at least one thermoplastic resin selected from polyvinyl acetal resins, ionomer resins, ethylene-vinyl acetate copolymers, polyolefins having an alkoxysilyl group, and hydrogenated block copolymers having an alkoxysilyl group.

6. A laminated glass comprising the adhesive sheet of any one of claims 1 to 5 interposed between glass sheets and integrally bonded to the glass sheets.
